(19) Europäisches Patentamt
European Patent Office
Office européen des brevets

(11) **EP 2 667 360 B1**

(12) **FASCICULE DE BREVET EUROPEEN**

(45) Date de publication et mention
de la délivrance du brevet:
**17.07.2019 Bulletin 2019/29**

(51) Int Cl.:
***G06T 17/05*** *(2011.01)*     ***G06T 17/20*** *(2006.01)*

(21) Numéro de dépôt: **13305635.8**

(22) Date de dépôt: **17.05.2013**

(54) **Procédé d'exploitation d'un milieu souterrain selon un schéma d'exploitation défini par une représentation optimisée**

Verfahren zur Nutzung einer unterirdischen Umgebung, gemäß einem durch eine optimierte Darstellung definierten Nutzungsschema

Method of exploitation of a subterranean environment according to an exploitation scheme defined by an optimised representation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2012 FR 1201451**

(43) Date de publication de la demande:
**27.11.2013 Bulletin 2013/48**

(73) Titulaire: **IFP Energies nouvelles**
**92500 Rueil-Malmaison (FR)**

(72) Inventeurs:
• **Yahiaoui, Brahim**
**92150 Suresnes (FR)**
• **Benali, Abdallah**
**92150 Suresnes (FR)**
• **Bennis, Chakib**
**92500 Rueil-Malmaison (FR)**
• **Borouchaki, Houman**
**75007 Paris (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**FR-A1- 2 948 215**

• **ALLIEZ P ET AL: "Interactive Geometry Remeshing", ACM TRANSACTIONS ON GRAPHICS (TOG), ACM, US, vol. 21, no. 3, 1 janvier 2002 (2002-01-01), pages 347-354, XP002260609, ISSN: 0730-0301, DOI: 10.1145/566570.566588**
• **LIGANG CHEN ET AL: "An Improved Laplacian Smoothing Approach for Surface Meshes", COMPUTATIONAL SCIENCE Â ICCS 2007; [LECTURE NOTES IN COMPUTER SCIENCE;;LNCS], SPRINGER BERLIN HEIDELBERG, BERLIN, HEIDELBERG, vol. 4487, 27 mai 2007 (2007-05-27), pages 318-325, XP019093950, ISBN: 978-3-540-72583-1**
• **XIANGMIN JIAO ET AL: "Optimizing Surface Triangulation Via Near Isometry with Reference Meshes", COMPUTATIONAL SCIENCE Â ICCS 2007; [LECTURE NOTES IN COMPUTER SCIENCE;;LNCS], SPRINGER BERLIN HEIDELBERG, BERLIN, HEIDELBERG, vol. 4487, 27 mai 2007 (2007-05-27), pages 334-341, XP019093952, ISBN: 978-3-540-72583-1**
• **GARIMELLA R V ET AL: "Triangular and quadrilateral surface mesh quality optimization using local parametrization", COMPUTER METHODS IN APPLIED MECHANICS AND ENGINEERING ELSEVIER NETHERLANDS, vol. 193, no. 9-11, 5 mars 2004 (2004-03-05), pages 913-928, XP008162022, ISSN: 0045-7825**

EP 2 667 360 B1

## Description

La présente invention concerne le domaine de l'exploration pétrolière, et plus particulièrement l'étude des écoulements de fluides au sein d'une formation souterraine.

Le procédé s'applique notamment à l'étude des déplacements de fluides tels que des hydrocarbures dans un gisement, ou réservoir souterrain, traversé par des failles. Ces études sont réalisées dans le cadre de modélisation de bassin, de simulation de réservoir, et/ou de simulations d'injection de $CO_2$ dans une formation souterraine.

La modélisation de bassin vise à reconstruire l'histoire géologique d'un bassin sédimentaire et de ses systèmes pétroliers pour aider à localiser les pièges à hydrocarbures, c'est-à-dire les réservoirs, à estimer leur quantité et qualité, et enfin, à évaluer les risques de rencontrer des excès de pression pendant les forages. La simulation de réservoir étudie l'évolution au cours du temps des proportions d'eau, de gaz et de pétrole dans le réservoir afin de juger de la rentabilité, de valider ou d'optimiser la position des puits assurant le fonctionnement de l'exploitation du réservoir. Dans une époque où le développement durable et la protection de l'environnement deviennent primordiaux, une troisième étude liée à l'exploration pétrolière consiste à effectuer des simulations pour l'injection du $CO_2$ dans un milieu souterrain poreux.

La modélisation de bassin, la simulation de réservoir et la simulation de $CO_2$ sont des techniques basées sur la simulation d'écoulement dans un milieu poreux. Une représentation du milieu souterrain, aussi appelé modèle de réservoir, constitue une maquette du sous-sol, représentative à la fois de la structure et de son comportement. Généralement ce type de maquette est représenté sur un ordinateur. Un simulateur d'écoulement quant à lui est un logiciel permettant, entre autre, de modéliser la production d'un gisement en fonction du temps, à partir de mesures décrivant le gisement, c'est-à-dire à partir d'une représentation du milieu souterrain. Ces simulations sont réalisées au moyen d'un système d'équations aux dérivées partielles par des méthodes de volumes finis sur un modèle maillé du milieu souterrain concerné.

Aujourd'hui, l'exploration s'intéresse aux zones à géométrie complexe où les failles sont nombreuses et leurs positions aléatoires. La construction automatique d'un maillage 3D capable de représenter cette complexité géométrique est la première étape indispensable à l'élaboration du logiciel de simulation, le simulateur d'écoulement, pour un tel milieu, à partir des horizons qui délimitent les différentes couches géologiques, et des failles qui coupent les horizons. Les horizons et les failles sont fournis en tant que surfaces, triangulées à partir d'un semis de points. Ces points résultent généralement de sondages sismiques. Compte tenu des simulateurs d'écoulement utilisés dans l'industrie, il est nécessaire que le maillage comprenne le plus d'éléments hexaédriques possible pour permettre un meilleur résultat de la simulation.

Par exemple, trois logiciels de simulation de bassin ont été développés à IFP Énergies nouvelles ; il s'agit de Temis 2D ®, Temis 3D ® et de Ceres 2D ®. Les deux premiers logiciels cités permettent de modéliser le bassin mais négligent la présence des failles, alors que le dernier est adapté pour prendre en compte les failles dans le cas bidimensionnel.

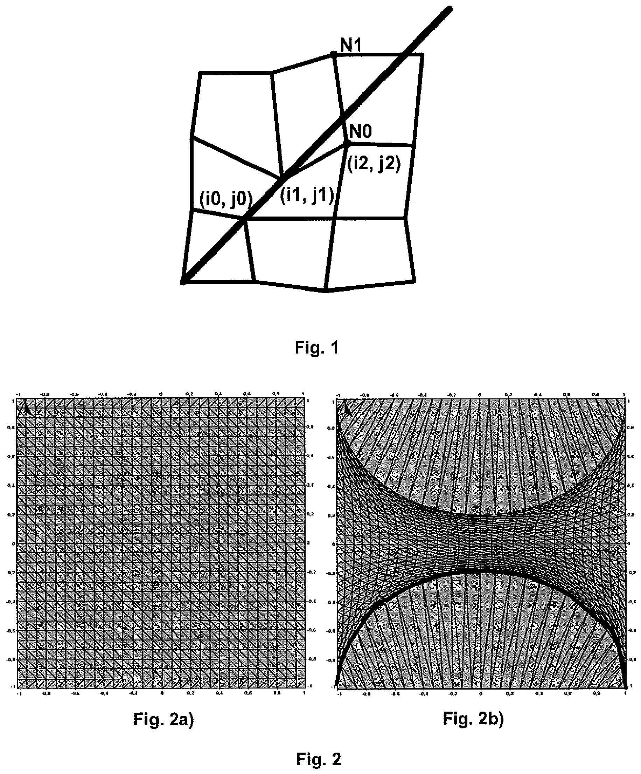

Pour obtenir un maillage tridimensionnel avec le plus d'éléments hexaédriques, il faut que les quadrillages bidimensionnels permettant de construire le maillage tridimensionnel comportent un maximum d'éléments de forme optimale, c'est-à-dire sensiblement rectangulaire et que les autres éléments du quadrillage ne soient pas dégénérés, c'est-à-dire avec des angles éloignés des angles droits. La figure 1 représente un quadrillage bidimensionnel comportant plusieurs quadrilatères dégénérés, qu'il est nécessaire de déformer pour obtenir un maillage optimisé pour les simulations.

En outre, pour construire un maillage adapté, représentant un milieu souterrain comprenant plusieurs failles, il a été développé une méthode, nommée méthode des grilles contraintes, notamment décrite dans la demande de brevet FR 2 948 215. Cette méthode est basée sur la réalisation des étapes suivantes :

- transformation de surfaces tridimensionnelles correspondantes aux horizons géologiques en surfaces bidimensionnelles, sur lesquelles sont projetées les failles,

- génération de quadrillages bidimensionnels réguliers,

- déformation des quadrillages bidimensionnels réguliers pour caler les noeuds des mailles pour prendre en compte des failles,

- transformation des quadrillages bidimensionnels réguliers déformés en surfaces quadrillées tridimensionnelles,

- construction du maillage du milieu souterrain en reliant les mailles des quadrillages des horizons géologiques.

Les maillages construits avec la méthode des grilles contraintes sont bien adaptés aux problèmes d'études des bassins, puisque la méthode traite un grand nombre de mailles à géométrie complexe. De plus, la méthode permet en quelque sorte de projeter chaque topologie d'horizon sur un autre horizon.

La méthode de calage des failles, proposée par cette méthode, consiste à avancer sur une trace de faille d'un bout à l'autre en calant les noeuds les plus proches sur les traces des failles tout en évitant de créer des quadrilatères dégénérés. La méthode de calage des failles utilise des critères géométriques, c'est-à-dire des critères basés essentiellement sur la distance la plus proche en incrémentant au fur et à mesure qu'on avance sur les noeuds appartenant à la trace de faille. Ceci nécessite une dispersion uniforme des quadrilatères voisins à cette trace. Cependant, la méthode de génération du quadrillage bidimensionnel régulier n'est adaptée que pour la génération des maillages de quadrilatères pour des cartes géométriques : elle respecte effectivement la non-dégénérescence des mailles, mais la dispersion n'est nullement prise en compte et la qualité des mailles déformées à proximité des failles n'est pas optimale, ceci peut être illustré par le cas où on dispose plus de mailles d'un côté d'une trace que de l'autre. De plus, après le calage, la méthode de déformation utilisée n'intervient que sur les mailles voisines à la trace, cette optimisation est insuffisante. En outre, dans les zones de plis du quadrillage bidimensionnel régulier, les mailles ne possèdent pas une forme optimisée pour les simulations. Ainsi, la méthode décrite dans le document de l'art antérieur ne permet pas de construire un modèle précis, adapté à la simulation de bassin.

Le procédé selon l'invention concerne un procédé d'exploitation d'un milieu souterrain déterminé à partir d'une représentation maillée du milieu souterrain. La qualité de maillage de la représentation du milieu est optimisée par une déformation d'un quadrillage bidimensionnel tout en minimisant le gradient de déplacement des noeuds du quadrillage. Le procédé selon l'invention peut être utilisé en complément de la méthode décrite dans le brevet FR 2 948 215 afin de former un modèle plus précis et adapté aux simulations.

**Le procédé selon l'invention**

L'invention concerne un procédé d'exploitation d'un milieu souterrain, dans lequel on exploite ledit milieu souterrain selon un schéma d'exploitation défini à partir d'une représentation dudit milieu, ladite représentation dudit milieu étant établie à partir d'un quadrillage bidimensionnel représentant ledit milieu souterrain. On optimise la qualité des mailles dudit quadrillage en déplaçant les noeuds dudit quadrillage par une méthode de minimisation de la déformation dudit quadrillage, ladite qualité d'une maille étant l'aptitude d'une maille à donner des résultats cohérents lors de simulations, ladite qualité d'une maille étant déterminée en calculant le rapport de la valeur de l'angle le plus faible de la maille sur la valeur d'un angle droit, ladite méthode de minimisation dudit quadrillage comporte les étapes suivantes :

(1) on génère un quadrillage de référence comportant uniquement des mailles régulières et recouvrant en totalité ledit quadrillage à optimiser ;
(2) on impose un déplacement d'au moins un noeud, dit noeud rigide, du quadrillage de référence sur un noeud correspondant dans le quadrillage à optimiser, ledit noeud rigide est un noeud appartenant au bord dudit quadrillage à optimiser ou un noeud correspondant à une trace d'une faille dudit milieu souterrain dans ledit quadrillage à optimiser ;
(3) on construit un quadrillage bidimensionnel optimisé par déplacement de tous les autres noeuds dudit quadrillage de référence, en minimisant le champ de déplacement desdits noeuds, par un lissage de toutes les mailles internes, ledit lissage respectant une certaine graduation de la quantité déformée initialement qui s'atténue au fur et à mesure qu'on s'éloigne du voisinage des noeuds rigides desdites failles et dudit bord.

En outre, l'invention concerne un procédé d'exploitation d'un milieu souterrain selon un schéma d'exploitation défini à partir d'une représentation dudit milieu, ladite représentation dudit milieu comportant un maillage tridimensionnel, ledit milieu souterrain comprenant au moins une couche sédimentaire traversée par au moins une faille, ladite couche étant délimitée verticalement par deux horizons géologiques. Pour ce procédé, on réalise les étapes suivantes :

a) on construit une représentation dudit milieu en réalisant les étapes suivantes :

i) on discrétise lesdits horizons géologiques par deux surfaces tridimensionnelles triangulées ;
ii) on transforme chaque surface tridimensionnelle triangulée en une surface bidimensionnelle triangulée sur laquelle on projette ladite faille, au moyen d'une technique de dépliage isométrique, la faille ainsi projetée formant des segments décrivant une courbe ouverte ;
iii) on génère un quadrillage bidimensionnel régulier pour chaque surface bidimensionnelle triangulée ;
iv) on optimise la qualité des mailles de chaque quadrillage bidimensionnel régulier en déplaçant les noeuds dudit quadrillage par une méthode de minimisation de la déformation dudit quadrillage, ladite qualité d'une maille étant l'aptitude d'une maille à donner des résultats cohérents lors de simulations, ladite qualité d'une maille étant déterminée en calculant le rapport de la valeur de l'angle le plus faible de la maille sur la valeur d'un angle droit, ladite méthode de minimisation dudit quadrillage comporte les étapes suivantes :

(1) on génère un quadrillage de référence comportant uniquement des mailles régulières et recouvrant en totalité ledit quadrillage bidimensionnel ;

(2) on déplace des noeuds dudit quadrillage de référence correspondant à des noeuds rigides du quadrillage à optimiser vers lesdits noeuds rigides, lesdits noeuds rigides étant les noeuds des bords du quadrillage bidimensionnel régulier ;

(3) on construit un quadrillage bidimensionnel optimisé par déplacement de tous les autres noeuds dudit quadrillage de référence, en minimisant le champ de déplacement desdits noeuds, par un lissage de toutes les mailles internes qui respecte une certaine graduation de la quantité déformée initialement qui s'atténue au fur et à mesure qu'on s'éloigne du voisinage des noeuds rigides desdites failles et dudit bord ;

v) on déforme chaque quadrillage bidimensionnel régulier optimisé pour caler les noeuds dudit quadrillage sur ladite courbe ;

vi) on optimise la qualité des mailles de chaque quadrillage bidimensionnel déformé en déplaçant les noeuds dudit quadrillage par une méthode de minimisation de la déformation dudit quadrillage, ladite qualité d'une maille étant l'aptitude d'une maille à donner des résultats cohérents lors de simulations, ladite qualité d'une maille étant déterminée en calculant le rapport de la valeur de l'angle le plus faible de la maille sur la valeur d'un angle droit, ladite méthode de minimisation dudit quadrillage comporte les étapes suivantes :

(1) on génère un quadrillage de référence comportant uniquement des mailles régulières et recouvrant en totalité ledit quadrillage bidimensionnel ;

(2) on déplace des noeuds dudit quadrillage de référence correspondant à des noeuds rigides du quadrillage à optimiser vers lesdits noeuds rigides, lesdits noeuds rigides étant les noeuds des bords du quadrillage bidimensionnel régulier et les noeuds de ladite courbe ;

(3) on construit un quadrillage bidimensionnel optimisé par déplacement des autres noeuds dudit quadrillage de référence, en minimisant le champ de déplacement desdits noeuds, par un lissage de toutes les mailles internes qui respecte une certaine graduation de la quantité déformée initialement qui s'atténue au fur et à mesure qu'on s'éloigne du voisinage des noeuds rigides desdites failles et dudit bord ;

vii) on effectue un changement de repère pour transformer chaque quadrillage optimisé ainsi déformé en une surface quadrillée tridimensionnelle, et on transforme en deux triangles chaque quadrilatère traversé par ladite faille au niveau d'une diagonale ;

viii) on génère le maillage de la représentation du milieu souterrain en créant des liaisons entre chaque noeud de chaque quadrilatère et de chaque triangle des deux surfaces quadrillées tridimensionnelles, et en découpant chaque maille dudit maillage du milieu souterrain traversée par ladite faille ;

b) on simule au moins un schéma d'exploitation au moyen de ladite représentation du milieu et d'un simulateur d'écoulement ; et

c) on exploite ledit milieu en mettant en oeuvre un schéma d'exploitation optimal.

Selon l'invention, ladite optimisation de la qualité desdites mailles par ladite méthode de minimisation de la déformation du quadrillage comprend en outre une étape finale de test de validité du maillage, si le maillage n'est pas valide les étapes (1) à (3) sont réitérées.

Avantageusement, le test de validité consiste à détecter les surfaces bidimensionnelles pliées dudit quadrillage bidimensionnel optimisé, si des surfaces pliées sont détectées, alors le champ de déplacement est divisé par deux lors de la réitération des étapes (1) à (3).

De préférence, ladite méthode de minimisation de la déformation du quadrillage comprend en outre une étape de conversion du quadrillage en un maillage triangulaire pour les étapes de déplacement des noeuds.

Selon un mode de réalisation de l'invention, ledit quadrillage de référence est généré en réalisant les étapes suivantes :

i) on génère un quadrillage bidimensionnel composé de rectangles sur ledit quadrillage à optimiser ;

ii) on oriente ledit quadrillage dans la direction dudit quadrillage à optimiser;

iii) on transforme ledit quadrillage par rotation, par dilatation et par translation de manière à ce que ledit quadrillage ait les mêmes propriétés géométriques que ledit quadrillage bidimensionnel à optimiser.

De préférence, on génère ledit quadrillage régulier au moyen des étapes suivantes :

i) on choisit quatre points sur la bordure de la surface bidimensionnelle, définissant quatre courbes sur la bordure ;

ii) on choisit les dimensions du quadrillage (N, M), et l'on discrétise alternativement chacune des quatre courbes en fonction desdites dimensions ; et

iii) on applique la formule de Coons pour construire le quadrillage.

De manière avantageuse, pour l'étape v) avant de déplacer ladite extrémité la plus proche, on vérifie que ce déplacement n'engendre pas un quadrilatère dont au moins un angle est supérieur à un seuil d'angle fixé, si c'est le cas, on déplace l'autre extrémité de l'arrête intersectée.

De préférence, on transforme ledit quadrillage régulier en une surface quadrillée à trois dimensions en réalisant les étapes suivantes :

i) pour chaque noeud non situé sur une faille, on détermine ses coordonnées à partir de coordonnées barycentriques du noeud dans un repère défini par un triangle de la surface triangulée 2D auquel il appartient ;

ii) pour chaque noeud situé sur une faille, on détermine ses coordonnées à partir d'abscisses curvilignes mesurées sur ladite faille ; et

iii) on établit des connectivités entre les noeuds de façon à maximiser un nombre de quadrilatères, seuls des quadrilatères pour lesquels une faille passe par l'une de ses diagonales sont divisés en deux triangles.

Selon une variante de réalisation, on crée des liaisons entre les noeuds en reliant chaque noeud de chaque surface quadrillée tridimensionnelle ayant des mêmes coordonnées i, j, et si une faille intersecte cette liaison, on relie un noeud avec ladite faille en considérant une direction d'un noeud voisin.

L'invention concerne également un produit programme d'ordinateur téléchargeable depuis un réseau de communication et/ou enregistré sur un support lisible par ordinateur et/ou exécutable par un processeur, le produit programme d'ordinateur comprend des instructions de code de programme pour la mise en oeuvre du procédé tel que décrit précédemment, lorsque ledit programme est exécuté sur un ordinateur.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1, déjà décrite, illustre un quadrillage bidimensionnel avec des quadrilatères dégénérés.

Les figures 2a) et 2b) illustrent le procédé d'optimisation selon l'invention.

La figure 3a) illustre un quadrillage avant optimisation et la figure 3b) illustre un quadrillage optimisé par le procédé selon l'invention.

Les figures 4 à 7 illustrent le procédé de génération d'un maillage d'un milieu souterrain selon l'invention :

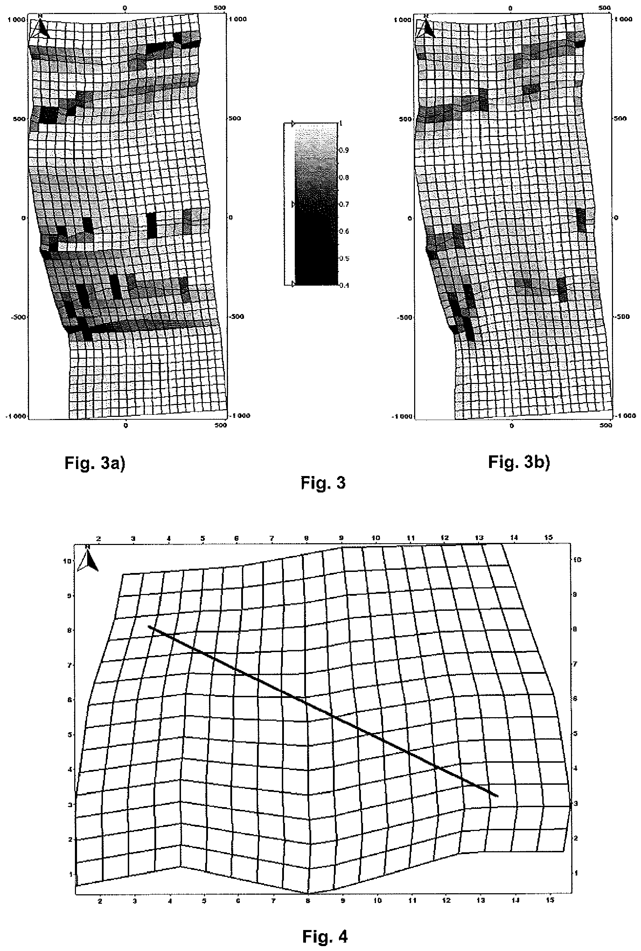

- la figure 4 montre un quadrillage de dimension 20 x 15 et une faille à caler,

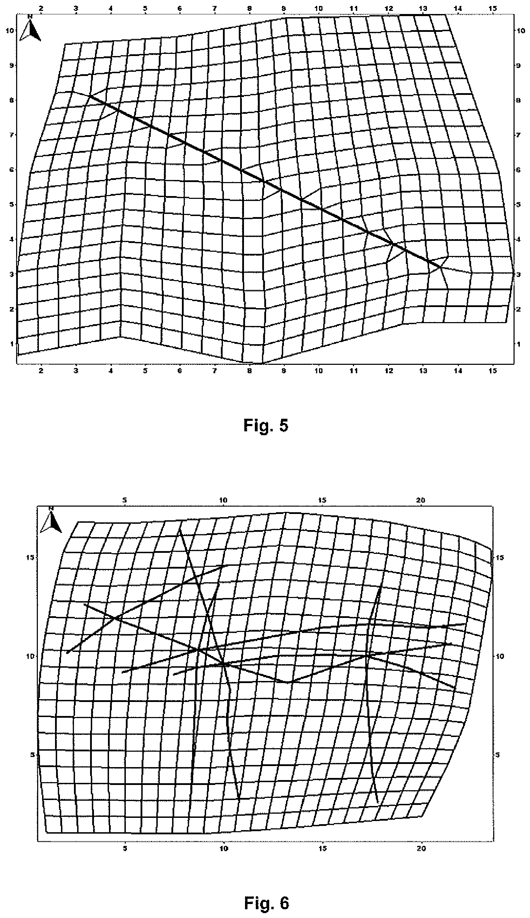

- la figure 5 montre le même quadrillage après le calage avec la faille,
- la figure 6 montre un quadrillage de dimension 25 x 20 avec 7 failles avant le calage,

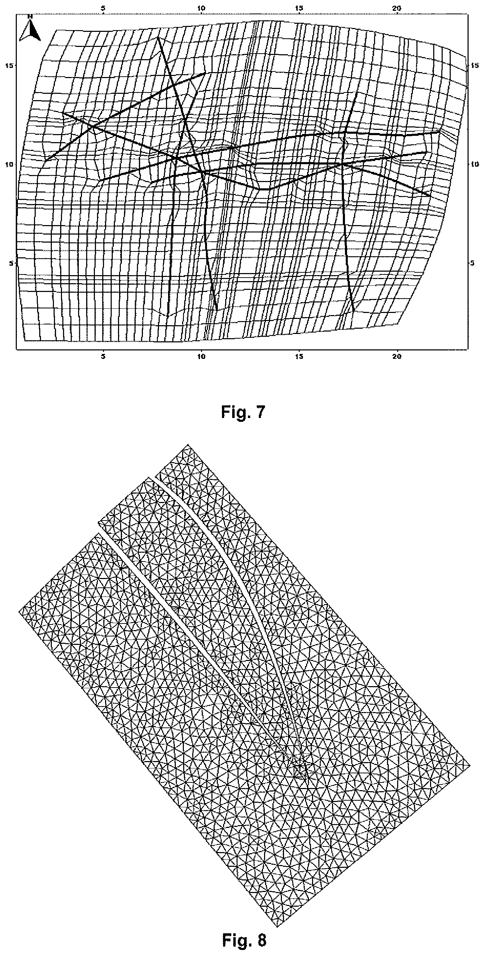

- la figure 7 montre le même quadrillage après le calage avec ces 7 failles. La dimension est devenue 51 x 33.

Les figures 8 à 12 montrent l'enchaînement des démarches du procédé de maillage proposé par la présente invention, en appliquant sur un exemple :

- la figure 8 montre un horizon réel 3D triangulé,

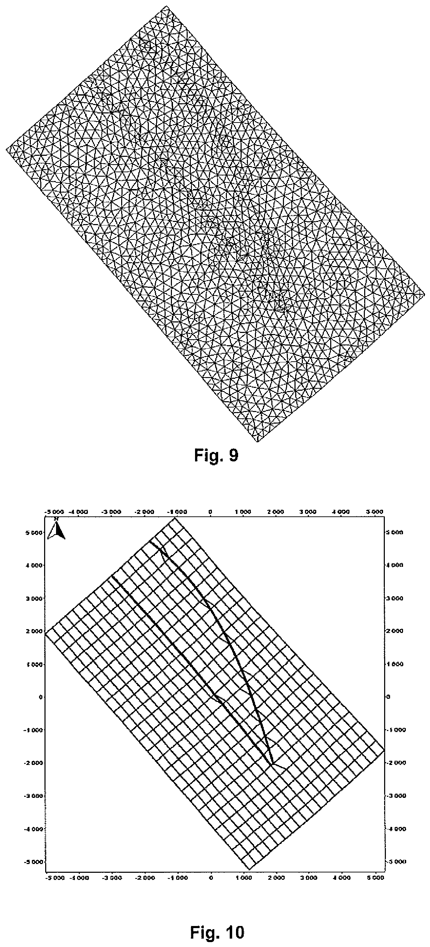

- la figure 9 montre le même horizon déplié,

- la figure 10 montre le quadrillage généré sur l'horizon déplié et calé avec les failles,

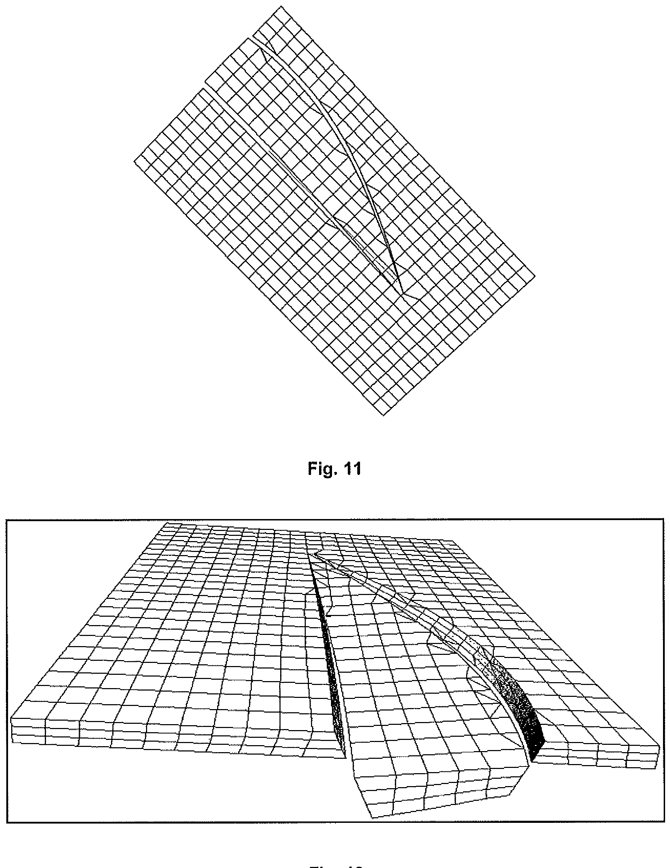

- la figure 11 montre le quadrillage après le report en horizon réel 3D,

- la figure 12 montre le maillage hexa-dominant généré en mettant correspondance deux horizons voisins.

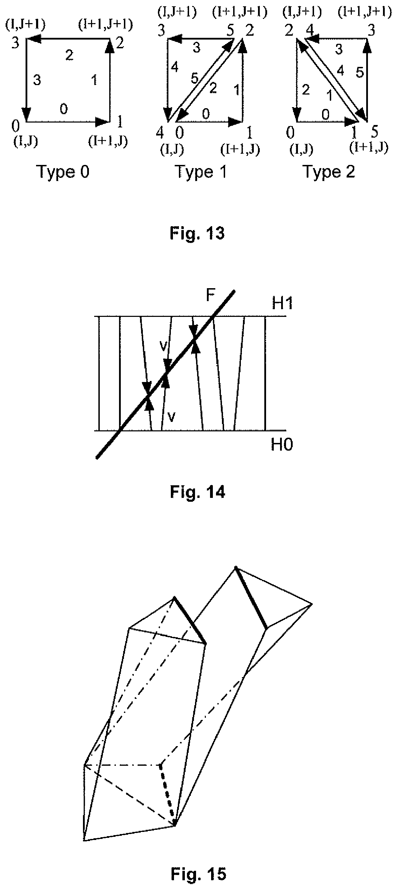

La figure 13 montre les trois types d'éléments d'un quadrillage reporté en horizon 3D.

La figure 14 montre le principe de la mise en correspondance de deux horizons.

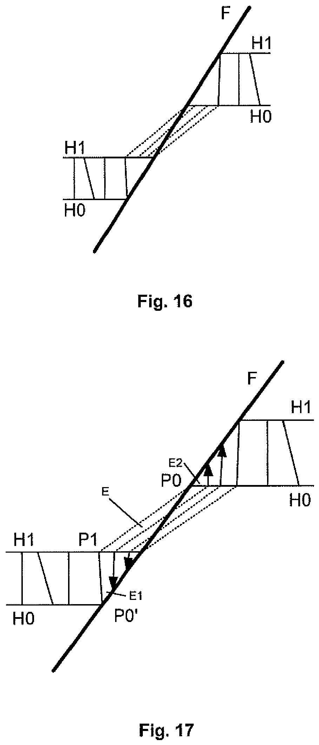

Les figures 15 et 16 montrent le problème de la mise en correspondance de deux horizons en zone faillée.

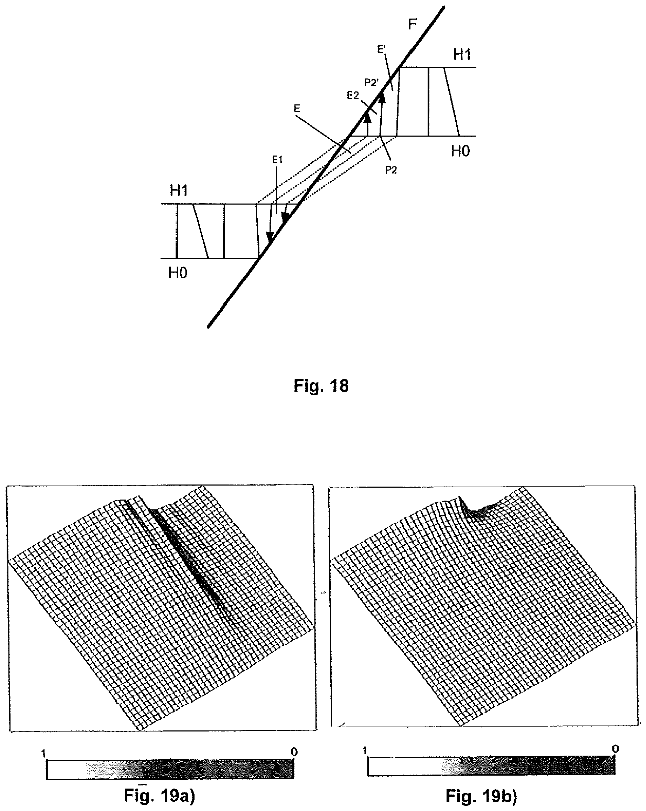

Les figures 17 et 18 montrent la solution au problème ci-dessus.

Les figures 19a) à 19d) illustrent les étapes de génération d'un quadrillage bidimensionnel calé et optimisé selon l'invention.

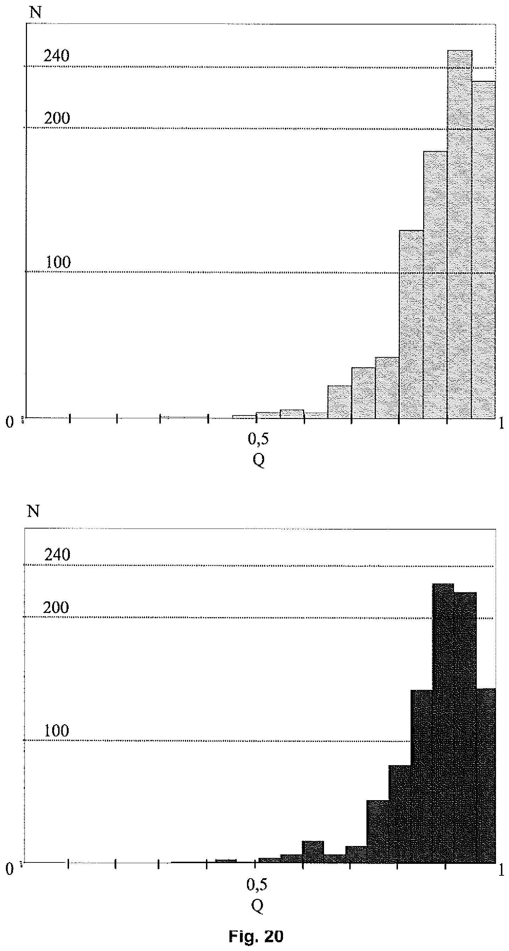

Les figures 20a) et 20b) sont des histogrammes représentant la répartition des mailles en fonction de leurs qualités, respectivement selon l'invention et selon l'art antérieur.

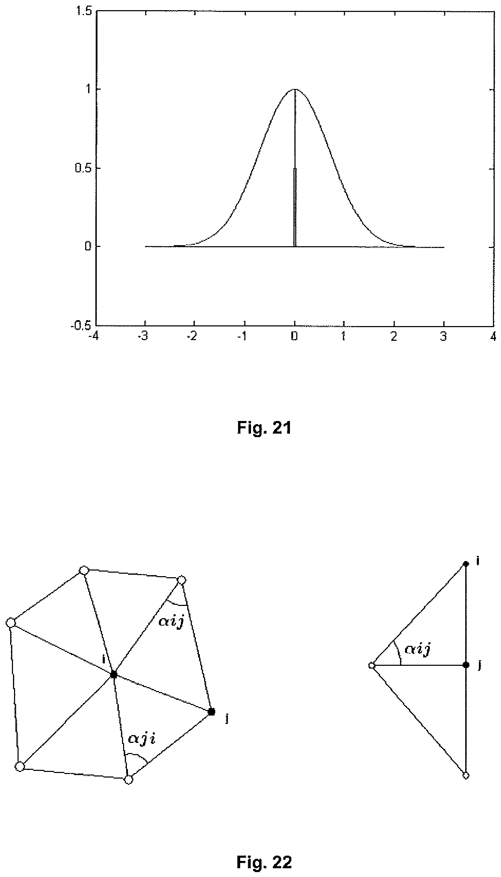

La figure 21 est une illustration de la méthode de déplacement des noeuds en une dimension.

La figure 22 illustre la disposition des angles dans le quadrillage.

**Description détaillée du procédé**

L'invention concerne un procédé d'exploitation d'un milieu souterrain, dans lequel on exploite ledit milieu souterrain selon un schéma d'exploitation défini à partir d'une représentation dudit milieu, ladite représentation dudit milieu étant établi à partir d'un quadrillage bidimensionnel représentant ledit milieu souterrain. L'optimisation de la qualité des mailles d'un quadrillage bidimensionnel régulier, représentant un milieu souterrain est obtenue par déplacement des noeuds dudit quadrillage par une méthode de minimisation de la déformation du quadrillage qui comporte les étapes suivantes :

a) génération d'un quadrillage de référence ;
b) déplacement de noeud rigide ;
c) construction du quadrillage bidimensionnel optimisé.

Le procédé selon l'invention peut comprendre en outre une étape d), pour laquelle on effectue un test de validité du maillage optimisé obtenu.

On appelle qualité d'une maille l'aptitude d'une maille à donner des résultats cohérents lors de simulations. Une maille rectangulaire est le type de mailles dont la qualité est la plus élevée, au contraire une maille dite dégénérée (avec des angles faibles) possède une mauvaise qualité. Cette qualité est déterminée en calculant le rapport de la valeur de l'angle le plus faible de la maille sur la valeur d'un angle droit (90 ° ou $\frac{\pi}{2}$ ). Ainsi, une maille rectangulaire aura une valeur de qualité de 1.

<u>Étape a) génération d'un quadrillage de référence</u>

Le but du procédé selon l'invention est d'obtenir un maillage optimisé en termes de qualité. Pour cela, on déforme un quadrillage bidimensionnel représentant le milieu souterrain en déplaçant certains noeuds du quadrillage de manière imposée, les autres noeuds étant déplacés en fonction de leur emplacement dans ledit quadrillage. Pour obtenir ce résultat, on génère dans un premier temps un quadrillage de référence recouvrant le quadrillage bidimensionnel existant. Ce quadrillage de référence comprend un nombre de mailles égal à celui du quadrillage à optimiser. En outre, le quadrillage de référence est constitué uniquement de rectangles, et les dimensions de ce quadrillage de référence sont supérieures aux dimensions du quadrillage bidimensionnel existant, par conséquent le quadrillage de référence est de bonne qualité et recouvre la totalité du quadrillage à optimiser. La figure 2a) illustre un tel quadrillage de référence.

On appelle quadrillage, un canevas (ensemble des lignes et des points principaux d'une figure) un plan constitué par deux familles de droites perpendiculaires délimitant des rectangles, de préférence des carrés.

Dans un mode de réalisation de l'invention, ledit quadrillage de référence est généré en réalisant les étapes suivantes :

i) on génère un quadrillage (constitué de rectangles) sur ledit quadrillage bidimensionnel ;
ii) on oriente ledit quadrillage dans la direction dudit quadrillage bidimensionnel à optimiser, par exemple en comparant l'orientation du quadrillage de référence à l'orientation du quadrillage bidimensionnel, et si les orientations sont différentes, on inverse celle du quadrillage de référence ;
iii) on transforme ledit quadrillage par rotation, par dilatation et par translation de manière à ce que ledit quadrillage ait les mêmes propriétés géométriques que ledit quadrillage bidimensionnel régulier, par exemple après avoir estimé un angle de rotation, un paramètre de dilatation et un vecteur de translation entre les deux quadrillages.

Ce processus a pour but de réduire le champ de déplacement initial et donc d'améliorer la précision ainsi que le temps de calcul.

De préférence, les quadrilatères du quadrillage de référence sont transformés en triangles afin de faciliter la construction du quadrillage optimisé. Il s'agit ici de séparer chaque quadrilatère en deux triangles en passant par une de leur diagonale. Le quadrillage de référence de la figure 2a) montre un tel découpage.

<u>Étape b) déplacement des noeuds rigides</u>

Pour le procédé d'optimisation du maillage selon l'invention, on impose le déplacement de certains noeuds du quadrillage de référence, appelés noeuds rigides, suivant des considérations géologiques ou géométriques. Ces noeuds rigides sont notamment les noeuds des bords du quadrillage ou les noeuds correspondant aux traces de failles, dont les déplacements sont connus.

Ces déplacements imposés consistent à déplacer les noeuds du quadrillage de référence vers l'emplacement des noeuds correspondants dans le quadrillage bidimensionnel. Le fait d'imposer le champ de déplacement sur les bords permet de garder et respecter la topologie de la surface dont le quadrillage est à optimiser. Pour la figure 2b), la première rangée et la dernière rangée de noeuds du quadrillage de référence ont été déplacés de manière imposée respectivement vers une ligne demi-circulaire pouvant être l'image d'une faille.

<u>Étape c) construction du quadrillage bidimensionnel optimisé</u>

L'objectif de cette étape est de déformer le quadrillage de référence tout en minimisant cette déformation. La déformation minimale permet de conserver la qualité du quadrillage de référence tout en conservant la topologie du quadrillage à optimiser représentatif du milieu souterrain : le quadrillage optimisé est donc à la fois représentatif du milieu et de bonne qualité. En effet, on diffuse et on distribue par cette déformation la qualité du quadrillage de référence vers le quadrillage à optimiser. La déformation minimale selon l'invention correspond à la minimisation du gradient du champ de déplacement des noeuds du quadrillage de référence vers la surface à optimiser.

Lors de cette étape, on déplace donc tous les noeuds du quadrillage dont le déplacement n'est pas imposé (les noeuds non rigides), afin d'obtenir un maillage de bonne qualité représentatif du milieu souterrain. On optimise non seulement les mailles proches des bords et des traces mais aussi toutes les mailles du quadrillage.

Pour le mode de réalisation préférentiel, pour lequel les quadrilatères ont été triangulés, on opère lors de cette étape la transformation inverse pour obtenir des quadrilatères.

Étant donné les points $M = (x,y)$, $M' = (x',y') \in \mathbb{R}^2$, un champ de déplacement $\vec{u} = (u_1(x,y), u_2(x,y))$ de $M$ vers $M'$ est définie par la transformation suivante :

$$\begin{cases} x' = x + u_1(x,y) \\ y' = y + u_2(x,y) \end{cases}.$$

L'idée selon l'invention est d'imposer le champ de déplacement $\vec{u}$ sur les noeuds des traces de failles et ceux du bord de la surface. Le choix de ce champ de déplacement est défini à partir de la déformation d'une surface de référence $S_R$ formée par un maillage régulier de très bonne qualité vers la surface $S_o$ dont le maillage est à optimiser. Ensuite, on minimise cette déformation qui se diffuse à l'intérieur de la surface en lissant toutes les mailles internes. Ce lissage doit respecter une certaine graduation de la quantité déformée initialement qui s'atténue au fur et à mesure qu'on s'éloigne du voisinage des traces des failles et du bord.

La figure 21 illustre le champ de déplacement dans le cas à une dimension. Pour cet exemple on impose un déplacement d'une unité au noeud numéroté 0, les noeuds -3 et 3 étant fixes. La courbe illustre alors le déplacement des noeuds intermédiaires (-2 ; -1; 1; 2), les noeuds les plus proche du noeud central sont alors soumis à un déplacement plus important.

La réalisation du calcul du champ de déplacement et de sa minimisation est détaillée en annexe de la description.

La figure 2b) illustre le quadrillage optimisé obtenu dans le cas extrême (faille représentée par une ligne semi-circulaire). On remarque que toutes les mailles du quadrillage de référence ont été modifiées et que les mailles situées entre les deux failles ne sont pas dégénérées : elles sont sensiblement rectangulaires et présentent donc une bonne qualité.

La figure 3a) illustre un quadrillage bidimensionnel représentant un milieu souterrain. Plusieurs mailles de ce quadrillage ont été déformées pour prendre en compte des failles. La qualité des mailles est représentée sur cette figure ; les mailles les plus sombres illustrent les mailles de mauvaise qualité. On constate que les mailles déformées pour prendre en compte les failles sont celles dont la qualité est la moins élevée. Les valeurs utilisées de la qualité pour la légende des figures 3 correspondent à la méthode de calcul expliquée ci-dessus : calcul du rapport de l'angle le plus faible sur l'angle droit.

La figure 3b) illustre le quadrillage bidimensionnel obtenu après optimisation selon l'invention. On remarque que, par rapport au quadrillage avant déformation, plus de mailles sont déformées et que la qualité des mailles est améliorée.

Étape d) test de validité du maillage

Après avoir déformé le quadrillage de référence, on peut effectuer un test de validité du quadrillage. Si le quadrillage obtenu n'est pas valide les étapes a) à c) sont réitérées. Par exemple, le test peut consister à détecter les surfaces pliées résultantes du procédé d'optimisation. En effet, lors de l'étape de déplacement des noeuds, il est possible qu'on génère des plis dans le quadrillage. Ces plis ne sont pas adaptés pour les simulations et aussi pour la construction d'un maillage tridimensionnel. Si par ce test on détecte des plis, alors on réitère les étapes a) à c) en divisant le champ de déplacement par deux.

L'invention concerne également un procédé d'exploitation d'un milieu souterrain selon un schéma d'exploitation défini à partir d'une représentation dudit milieu. La représentation du milieu comporte un maillage tridimensionnel. Le milieu souterrain comprend au moins une couche sédimentaire traversée par au moins une faille, la couche étant délimitée verticalement par deux horizons géologiques. Selon l'invention, on génère le maillage de la représentation du milieu souterrain en réalisant les étapes suivantes :

a) on discrétise lesdits horizons géologiques ;
b) on transforme chaque surface tridimensionnelle triangulée en une surface bidimensionnelle triangulée sur laquelle on projette ladite faille, au moyen d'une technique de dépliage isométrique, la faille ainsi projetée formant des segments décrivant une courbe ouverte ;
c) on génère un quadrillage bidimensionnel régulier pour chaque surface bidimensionnelle triangulée ;
d) on optimise la qualité des mailles de chaque quadrillage bidimensionnel régulier ;
e) on déforme chaque quadrillage bidimensionnel régulier optimisé pour caler les noeuds du quadrillage sur ladite courbe ;
f) on optimise la qualité des mailles de chaque quadrillage bidimensionnel déformé ;
g) on effectue un changement de repère pour transformer chaque quadrillage optimisé ainsi déformé en une surface quadrillée tridimensionnelle, et on transforme en deux triangles chaque quadrilatère traversé par ladite faille au niveau d'une diagonale ;
h) on génère ledit maillage du milieu souterrain en créant des liaisons entre chaque noeud de chaque quadrilatère et de chaque triangle des deux surfaces quadrillées tridimensionnelles, et en découpant chaque maille dudit maillage du milieu souterrain traversée par ladite faille.

Les étapes a), b), c), e), g) et h) sont connues, notamment du document FR 2 948 215. Par conséquent pour ces étapes on rappellera uniquement les caractéristiques essentielles.

Étape a) discrétisation des horizons géologiques

Lors de cette étape, les deux horizons géologiques délimitant chaque couche sédimentaire sont discrétisés par deux surfaces tridimensionnelles triangulées.

Étape b) transformation en surface bidimensionnelle triangulée

Cette étape consiste à déplier d'une façon isométrique les surfaces 3D triangulée de façon à obtenir une surface 2D triangulée. Cette étape permet de coudre les déchirures des failles présentes sur les surfaces 3D triangulée.

On appelle « dépliage » une transformation d'une surface 3D en une surface 2D (opération consistant à mettre à plat une surface). Cette transformation est « isométrique » lorsqu'elle conserve les mesures, telles que les longueurs des arêtes, et donc les surfaces telles les aires des triangles.

Le spécialiste connaît des outils et des méthodes pour réaliser un dépliage isométrique de surface. Le procédé selon l'invention ne dépend pas du type de méthode de dépliage.

La figure 8 illustre un exemple d'un horizon réel tridimensionnel triangulé, la figure 9 montre le même horizon déplié.

Étape c) génération d'un quadrillage bidimensionnel régulier

Cette étape consiste à générer un quadrillage 2D régulier, à partir de la bordure de la surface 2D triangulée.

On génère ce quadrillage régulier au moyen des étapes suivantes :

- on choisit quatre points sur la bordure de la surface 2D triangulée, définissant ainsi quatre courbes sur la bordure, appelées courbes frontalières, reliant ces quatre points.

Ces quatre points sont préférentiellement ceux au niveau desquels la bordure forme les angles les plus petits. On les appelle « coin ».

- on choisit les dimensions du quadrillage (deux entiers notés N et M), et l'on discrétise alternativement chacune des quatre courbes en fonction de ces dimensions.

Pour tous les quadrillages, on met en correspondance un coin et on oriente les courbes frontalières de telle manière que le domaine se trouve à gauche. Le domaine est ici un terme mathématique, c'est la forme géométrique qu'on veut mailler. Cette étape sert à orienter tous les horizons de la même façon pour faciliter l'étape finale : la mise en correspondance des horizons. Puis, on subdivise les courbes frontalières en N ou M segments de longueur constante, N et M étant les mêmes que le quadrillage en dessous.

- on applique la version discrétisée la formule de Coons pour construire le quadrillage régulier s'appuyant sur l'horizon déplié (surface 2D triangulée).

On rappelle la formule de Coons :
Étant donné quatre courbes paramétriques f1(u), f2(u), g1(v), g2(v) ($0 \le u, v \le 1$) définissant quatre bords jointifs, la formule de Coons calcule la surface la plus tendue qui passe par les quatre bords (qui interpole ces bords) :

$$S(u, v) = (1 - u)g1(v) + ug2(v) + (1 - v)f1(u) + vf2(u) - [(1 - u)(1 - v)P(0,0)$$
$$+ ((1 - u)vP(0,1) + u(1 - v)P(1,0) + uvP(1,1)]$$

Les sommets P(i,j) sont les quatre coins de la surface.
On peut alors obtenir un maillage régulier NxM de cette surface par simple échantillonnage en prenant pour sommets les points S(i,j) correspondant aux ui = i/(N-1), vj = j/(M-1), i=0 à N-1, j=0 à M-1. La formule restreinte aux points du maillage devient:

$$S(i, j) = (1 - \frac{i}{N-1})g1(j) + \frac{i}{N-1}g2(j) + (1 - \frac{j}{M-1})f1(i) + \frac{j}{M-1}f2(i)$$

$$- [(1 - \frac{i}{N-1})(1 - \frac{j}{M-1})P(0,0) + (1 - \frac{i}{N-1})\frac{j}{M-1}P(0,1)$$

$$+ \frac{i}{N-1}(1 - \frac{j}{M-1})P(1,0) + \frac{i}{N-1}\frac{j}{M-1}P(1,1)]$$

Les figures 4, 6, 9 et 19a) illustrent des quadrillages bidimensionnels réguliers selon l'invention. Sur la figure 4 une faille a été représentée, alors que sur la figure 6 plusieurs failles sont représentées. La figure 19a) représente, quant à elle, la qualité des mailles du quadrillage. On remarque une zone étendue de mailles de qualité faible.

Étape d) optimisation de la qualité des mailles

A l'aide des étapes d'optimisation du quadrillage décrites ci-dessus, on génère un quadrillage bidimensionnel optimisé en termes de qualité du maillage. Pour l'application des étapes précédemment décrites d'optimisation du quadrillage, les noeuds rigides correspondent aux noeuds des bords du quadrillage à optimiser, le déplacement de ces noeuds rigides est donc imposé sur les noeuds des bords du quadrillage à optimiser.
La figure 19b) illustre un quadrillage bidimensionnel optimisé suivant l'exemple de la figure 19a). Sur cette figure on remarque que la zone de mailles de qualité faible est réduite par rapport à l'étape précédente.

Étape e) calage des failles

La prise en compte d'une faille consiste à déformer le maillage de façon à ce qu'il soit conforme à la réalité du milieu souterrain à mailler. En effet, si une faille traverse un milieu, généralement les couches sédimentaires de ce milieu sont cassées et déformées. Le maillage doit donc rendre compte de ces déformations induites par les failles.

*Cas d'une faille unique*

Au cours de cette étape, on prend en compte la faille au sein du quadrillage régulier, en réalisant les étapes suivantes :

- on détermine une première arête du quadrillage intersectée par la courbe ouverte, en parcourant cette courbe segment par segment et en partant de l'une de ses extrémités ;
- on déplace l'extrémité de l'arête intersectée la plus proche du point d'intersection vers le point d'intersection.

Une difficulté peut apparaître du fait que l'on puisse produire des quadrilatères dégénérés en faisant bouger cette extrémité. Ce problème est illustré sur la figure 1 :
Soient trois noeuds tels que :

- (i2, j2) le noeud à faire bouger

- (i1, j1) le noeud bougé juste avant (i2, j2)

- (i0, j0) le noeud bougé juste avant (i1, j1)

Si (i0 = i1 ou j0 = j1) alors (i0, j0) et (i1, j1) forment une arête (deux noeuds bougés successivement forment soit une diagonale, soit une arête d'un quadrilatère). De même, (i1, j1) et (i2, j2) forment une deuxième arête si on a (i1 = i2 ou j1 = j2). Par conséquent, ces deux arêtes construites seront dans le même quadrilatère si |i0 - i2| = 1 et |j0 - j2| = 1 et seront considérées comme alignées si l'angle entre elles dépasse un certain seuil d'alignement. Cette situation n'est pas acceptable car les hexaèdres ayant ce quadrilatère comme face seront torsadés. Pour surmonter cette difficulté, avant de déplacer l'extrémité la plus proche, on vérifie que ce déplacement n'engendre pas un quadrilatère dégénéré. On qualifie de dégénéré un quadrilatère dont au moins un angle est supérieur à un seuil d'angle fixé (si un angle du quadrilatère est supérieur ce seuil, cela signifie qu'un autre angle de ce quadrilatère sera petit et par conséquent la valeur de la qualité sera faible). Si effectivement, le fait de déplacer l'extrémité la plus proche engendre un tel quadrilatère, alors on déplace l'autre extrémité de l'arête intersectée. Selon l'exemple de la figure 1, on bouge l'autre extrémité de l'arête intersectée par la faille au lieu de (i2, j2).

La méthode étant mise en oeuvre par un ordinateur on décrit l'algorithme relatif à cette étape. L'algorithme démarre par l'identification du quadrilatère qui contient le premier point de la faille. Puis, l'intersection entre le premier segment de la faille et les arêtes de ce quadrilatère est calculée. Si aucune intersection n'est détectée, on passe au segment suivant de la faille et on boucle jusqu'à ce qu'une intersection soit trouvée. Ensuite, on bouge l'extrémité de l'arête intersectée la plus proche du point d'intersection vers celui-ci. S'il en résulte la formation d'un quadrilatère dégénéré, c'est l'autre extrémité de l'arête qui est bougée. Pour calculer l'intersection suivante, on avance dans les quadrilatères ayant le dernier noeud épousé en commun, en excluant ceux qui ont les deux derniers noeuds épousés comme une diagonale ou une arête. S'il n'y a plus d'intersection entre le segment courant et les quadrilatères à visiter, on réaffecte les quadrilatères à visiter avec ce qui contient le bout du segment courant, et on passe au segment suivant pour calculer l'intersection, et ainsi de suite. A la fin, on cale les deux bouts de la faille avec les noeuds les plus proches.

*Cas de failles multiples*

En présence de failles multiples, tous les noeuds du quadrillage ne sont pas libres de bouger, car un noeud qui a déjà été déplacé pour prendre en compte une première faille, ne doit pas être modifié pour prendre en compte une deuxième faille. L'algorithme de calage doit donc tenir compte de ce nouveau contexte plus contraignant, et une procédure de raffinement peut être effectuée pour se libérer de cette contrainte.

Selon l'invention, on prend en compte de multiples failles au sein du quadrillage régulier, en réalisant les étapes suivantes :

- on détermine une première arête dudit quadrillage intersectée par ladite ligne ouverte, en parcourant ladite ligne segment par segment et en partant d'une extrémité de ladite ligne ouverte ;

- on déplace l'extrémité de l'arête la plus proche du point d'intersection vers ledit point d'intersection si ce déplacement n'engendre pas un quadrilatère dont au moins un angle est supérieur à un seuil d'angle fixé, et si cette extrémité n'a pas déjà été déplacée ; sinon

- on déplace l'autre extrémité vers ledit point d'intersection si cette extrémité n'a pas déjà été déplacée ; sinon

- on raffine le maillage, jusqu'à ce qu'une extrémité puisse être déplacée, et on déplace cette extrémité.

Le raffinement du maillage peut être réalisé au moyen des étapes suivantes :

- on ajoute un nouveau noeud au maillage, correspondant à un point d'intersection entre une faille et l'arête pour laquelle aucune extrémité ne peut être déplacée ;

- si l'arête est verticale, on dédouble la ligne complète du quadrillage contenant le point d'intersection, en ajoutant une succession d'arêtes horizontales, dans tous les quadrilatères de la ligne, la succession d'arêtes passant par le point d'intersection ;

- si l'arête est horizontale, on dédouble la colonne complète du quadrillage contenant le point d'intersection, en ajoutant une succession d'arêtes verticales, dans tous les quadrilatères de la colonne, la succession d'arêtes passant par le point d'intersection.

Ce raffinement est également appliqué à tous les horizons situés plus bas, si l'on traite les horizons du plus bas vers le plus haut.

La méthode étant mise en oeuvre par un ordinateur on décrit l'algorithme relatif à cette étape. Pour décrire si un noeud est contraint par une ou plusieurs failles, deux notions sont introduites : la première dite « Degré faillé d'un noeud » et la deuxième dite « Failles passantes d'un noeud ».

*Degré faillé d'un noeud (df)*: Un noeud S est dit de degré faillé *n* s'il est le point d'intersection de *n* failles. Si *n* est nul, alors aucune faille ne passe par ce noeud. Les degrés faillés des noeuds sont stockés comme une propriété du quadrillage, utiles pour la phase de prise en compte des failles, pour vérifier si un noeud est contraint par des failles, pour la phase d'optimisation du quadrillage (df = 0 : bouger librement le noeud ; df = 1 : projeter sur la faille passante ; df >= 2 : ne pas bouger), et enfin, pour la phase de report en 3D du quadrillage, pour décider quand et comment un noeud est dédoublé.

*Failles passantes d'un noeud* : c'est la liste de failles qui passent par un noeud.

Le processus global du calage des failles multiples itère de bas en haut sur tous les horizons, pour générer des quadrillages réguliers et y caler les failles. Pour chaque horizon, on génère d'abord un quadrillage de la même dimension que ceux situés plus bas (géologiquement plus anciens), puis on cale tous les points d'intersection entre les failles et les extrémités des failles. On itère ensuite sur toutes les failles pour les prendre en compte dans le maillage. Lorsqu'un raffinement est nécessaire sur un quadrillage d'un horizon pour épouser une faille, les quadrillages des horizons déjà traités subissent de manière exhaustive le même raffinement, pour garder une seule dimension pour tous les quadrillages.

Concernant les structures des données, compte tenu du fait que le nombre des noeuds d'un quadrillage sur un horizon peut augmenter suite à un raffinement, une liste chaînée est utilisée pour représenter le quadrillage, afin de faciliter l'ajout d'un nouveau noeud à une position quelconque. Aussi, les noeuds traversés par une faille sont enregistrés dans une liste chaînée pour permettre une insertion rapide.

Pour caler une faille donnée, on cherche, segment par segment, les points d'intersection entre la faille et le quadrillage, et on décide les noeuds à bouger jusqu'à ces points d'intersection. Un point d'intersection est calculé de la façon suivante : on commence par le premier noeud dans la liste des noeuds traversés par une faille qui représente le début du premier segment de la faille, on récupère les quatre cellules voisines de ce noeud, et on cherche l'intersection du premier segment avec ces quatre cellules. Si une intersection est trouvée, on choisit une extrémité de l'arête intersectée pour la bouger jusqu'au point d'intersection. Les cellules voisines du noeud représentant cette intersection deviennent les cellules à visiter pour calculer l'intersection suivante avec le même segment de faille, à l'exclusion de celles qui ont comme arête ou diagonale le nouveau noeud épousé et celui d'avant. S'il n'y a plus d'intersection entre le segment courant et les cellules à visiter, on réaffecte les cellules à visiter avec celle qui contient le bout du segment courant, et on passe au segment suivant pour calculer l'intersection, ainsi de suite.

Au cours du parcours de la faille, on peut rencontrer des points déjà épousés qui représentent par exemple les intersections de la faille avec autres failles présentes sur le même horizon. Il faut donc vérifier pour le noeud dernièrement épousé, s'il existe un noeud en avant dans la liste des noeuds traversés par une faille. Si oui, si les deux noeuds forment une arête ou une diagonale d'un quadrilatère, le noeud en avant devient le noeud courant pour calculer les cellules à visiter, et on passe au segment faille qui correspond à ce noeud pour continuer le calcul d'intersection.

Ensuite, le processus de raffinement peut être déclenché par l'ajout comme un nouveau noeud d'un point d'intersection entre une faille et un quadrillage.

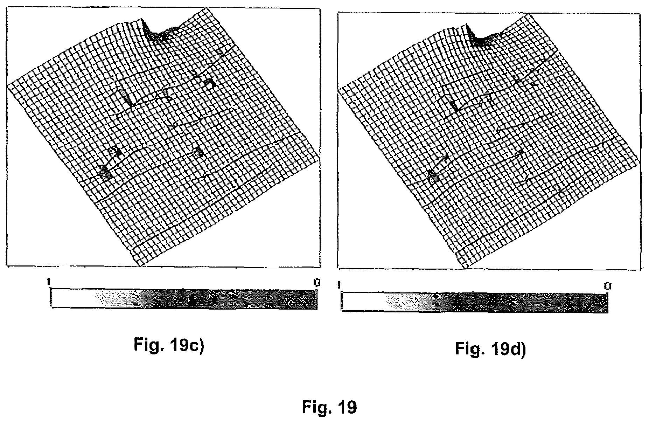

Les figures 5, 7, 10 et 19c) montrent des quadrillages après la prise en compte de failles selon les exemples des figures 4, 6, 8 et 19a). Sur la figure 5 avec une seule faille, on remarque que seules les mailles voisines de la faille sont déformées. Sur la figure 7 avec plusieurs failles et pour lequel on a utilisé une méthode de raffinement, la disposition de nombreuses mailles est modifiée et de nouvelles mailles sont créées par la méthode de raffinement. La figure 10 illustre le calage des failles pour l'exemple de la figure 8. Sur la figure 19c) on remarque que le calage des failles engendre un certains nombres de mailles de qualité faible à proximité des failles.

Étape f) optimisation de la qualité de mailles

A l'aide des étapes d'optimisation du quadrillage décrites ci-dessus, on génère un quadrillage bidimensionnel optimisé en termes de qualité du maillage. Pour l'application de ces étapes d'optimisation du quadrillage, les noeuds rigides correspondent aux noeuds des bords du quadrillage à optimiser et aux noeuds sur les traces des failles du quadrillage à optimiser, le déplacement de ces noeuds rigides est donc imposé sur les noeuds des bords et les noeuds des traces de failles du quadrillage à optimiser.

La figure 19d) illustre un quadrillage bidimensionnel optimisé suivant l'exemple de la figure 19a). Sur cette figure on remarque que la zone de mailles de qualité faible est réduite par rapport à l'étape précédente.

Étape g) transformation en surface quadrillée tridimensionnelle

Cette étape consiste à reporter le quadrillage régulier, déformé pour tenir compte des failles et optimisé, en horizon réel 3D.

Selon l'invention, on peut transformer le quadrillage régulier en une surface quadrillée à trois dimensions en effectuant un changement de repère, du repère du quadrillage régulier au repère de la surface 3D triangulée, des noeuds du quadrillage. Les coordonnées des noeuds hors faille sont déterminées à partir de leurs coordonnées barycentriques dans un repère défini par le triangle de la surface triangulée 2D auquel ils appartiennent. Les coordonnées des noeuds situés sur une faille sont déterminées à partir de leurs abscisses curvilignes sur la faille. Les connectivités sont ensuite établies de façon à maximiser le nombre de quadrilatères, seuls les quadrilatères pour lesquels une faille passe par l'une de ses diagonales, sont divisés en deux triangles.

En particulier on peut réaliser les étapes suivantes :

- on positionne les noeuds dans le repère 3D :

  - pour chaque noeud du quadrillage situé sur une faille, on détermine l'abscisse curviligne dudit noeud sur la faille, puis on reporte ce noeud sur la faille dans le repère 3D au moyen de cette abscisse curviligne, et on dédouble ce noeud sur chaque coté de la lèvre de la faille si nécessaire ;

  - pour chaque noeud du quadrillage situé en dehors une faille, on détermine les coordonnées barycentriques de chaque noeud dudit quadrillage dans un repère défini par le triangle de la surface triangulée 2D auquel le noeud appartient, puis on positionne chaque noeud dans un repère défini par le triangle de la surface triangulée 3D auquel le noeud appartient, en fonction desdites coordonnées barycentriques ;

- on connecte ces noeuds par des arêtes de façon à obtenir une surface 3D maillée avec un maximum de quadrilatère, seuls les quadrilatères pour lesquels une faille passe par l'une de ses diagonales, sont divisés en deux triangles, comme l'illustre la figure 11 (pour l'exemple de la figure 8).

La méthode étant mise en oeuvre par un ordinateur on décrit l'algorithme relatif à cette étape. La structure principale représente un quadrillage 3D quasi-régulier, avec certains noeuds (I, J) dédoublés en deux ou plus. La figure 13 montre trois types de cellules pseudo-quadrilatère : quadrilatère normal, quadrilatère dédoublé en deux triangles par la diagonale allant de gauche inférieure à droite supérieure, quadrilatère dédoublé en deux triangles par la diagonale allant de droite inférieure à gauche supérieure. La numérotation locale des noeuds et des arêtes du quadrilatère est aussi indiquée dans le schéma. Avec cette notion des cellules pseudo-quadrilatère, le quadrillage reporté en horizon réel 3D reste une surface IJ.

La structure principale est décrite par :

- *nx* et *ny* : nombre de colonnes et de lignes

- *nodes* : liste des noeuds (I, J) ;

- *cells* : liste des cellules

Pour un noeud (I, J), sont stockées les informations suivantes :

- nombre des noeuds dédoublés

- triangle conteneur et les coordonnées barycentriques dans le triangle, si le noeud n'est pas dédoublé ;

- pour chaque noeud dédoublé : numéro de faille, référence du côté de la faille, numéro du segment de la faille et abscisse curviligne du noeud sur ce segment. Quand le noeud représente une intersection entre des failles, les informations stockées sont plutôt le numéro du noeud dans la triangulation, la référence du côté d'une faille, l'autre référence du côté de l'autre faille.

- pour chaque noeud dédoublé : coordonnées x, y, z

Pour une cellule pseudo-quadrilatère, sont stockées les informations suivantes :

- type de la cellule

- nombre de sommets

- tableau de sommets

L'algorithme démarre par un parcours des noeuds du quadrillage régulier 2D épousé avec les failles. Pour chaque noeud (I, J), leurs failles passantes sont d'abord récupérées. S'il n'y a pas de failles passantes, un triangle conteneur du noeud dans la triangulation dépliée est localisé, le noeud correspondant sur l'horizon réel 3D est calculé en utilisant les coordonnées barycentriques du triangle du même numéro sur la triangulation originale 3D. Si le noeud (I, J) se trouve sur une seule faille, est d'abord récupéré le segment de la faille où se trouve ce noeud en espace déplié. L'abscisse curviligne du noeud sur ce segment est ensuite calculée. Puis, les deux noeuds correspondants dédoublés sont calculés en utilisant cette abscisse curviligne sur le même segment en deux côtés de la faille en espace réel. Pour un noeud se situant à l'intersection des failles, son numéro dans la triangulation est récupéré, les références des côtés de failles qui s'y intersectent sont enregistrées.

A part les coordonnées, les informations concernant les failles ou le triangle conteneur sont stockées pour faciliter la génération du maillage volumique par la mise à correspondance des horizons.

Une fois que les noeuds du quadrillage déplié sont reportés en horizon réel, la connectivité entre ces noeuds est établie en formant des cellules pseudo-quadrilatères. Ces cellules sont construites une par une en parcourant d'abord la direction I puis J. Le type de la cellule courante est d'abord déterminé. Pour ce faire, il faut juste vérifier s'il y a une faille passante sur l'une de deux diagonales du quadrilatère en quadrillage déplié. Si oui, le type est 1 ou 2, sinon, le type est 0. Le nombre de sommets pour la cellule courante est alors obtenu en fonction de son type, ainsi que l'indice (I, J) de chaque sommet. Avec cet indice, on vérifie si un sommet est dédoublé ou pas, en examinant la liste de noeuds (I, J) préalablement remplis. Si tous les sommets sont dédoublés, on ajoute la cellule courante dans une liste temporaire, qui sauvegarde les cellules avec tous ses sommets dédoublés pour traiter à la fin, et on passe à la cellule suivante. Sinon, le noeud IJ non dédoublé est tout de suite reporté, car il y a un seul noeud 3D correspondant. Pour chaque noeud de la cellule courante déjà reporté, les noeuds adjacents et opposés dédoublés dans la cellule sont calculés de la façon suivante : si le noeud non dédoublé et celui adjacent est sur la même faille, on choisit le noeud de même côté de la faille ; sinon, on prend le centième point sur l'arête constituée par le noeud non dédoublé et celui adjacent, on le localise dans la triangulation dépliée, on le reporte en triangulation réelle en utilisant le même triangle et les mêmes coordonnées barycentriques. On calcule ensuite la distance entre le point reporté et tous les noeuds dédoublés du noeud IJ adjacent, on choisit le noeud le plus proche comme le sommet correspondant de la cellule courante. Pour le noeud opposé au noeud courant (déjà reporté) de la diagonale, on choisit le noeud dédoublé sur l'autre côté de la faille. Cette procédure reboucle jusqu'à ce que tous les sommets soient reportés.

Pour une cellule avec tous ses sommets dédoublés, pour chacune de ses arêtes, l'arête en face dans la cellule voisine est repérée, la référence de la faille où se trouve cette arête en face est récupérée, l'arête courante est donc sur l'autre côté de la faille avec une référence différente. Les noeuds dédoublés correspondants sont ainsi déterminés selon cette référence. La figure 11 montre le quadrillage de la figure 10 reporté en horizon réel 3D.

Étape h) génération du maillage du milieu souterrain

Les étapes a) à f) sont réalisées sur chaque horizon, en conservant le même nombre de quadrilatère pour chaque horizon, on peut donc reconstruire un maillage tridimensionnel entre les différents horizons. Cette étape consiste à construire un maillage tridimensionnel du milieu, en reliant directement les noeuds ayant les mêmes coordonnées I, J sur deux horizons voisins de façon à former des mailles tridimensionnelles, et à découper éventuellement ces mailles si elles sont traversées par la faille : si une faille intersecte cette liaison on relie un noeud avec la faille en considérant une direction d'un noeud voisin. Ceci est illustré sur la figure 14.

Quand un quadrilatère sur l'un de deux horizons est dédoublé en deux triangles via une faille qui passe par la diagonale, le quadrilatère correspondant sur l'autre horizon est aussi virtuellement découpé de la même manière et deux prismes seront formés. Pourtant, un des deux prismes est torsadé et l'interface de la faille n'est pas respectée. Dans la figure 15, les segments dessinés en gras sont sur la même surface de faille, on voit que le quadrilatère en bas à gauche de la faille rejoint deux triangles en haut à gauche et à droite de la faille.

Une configuration problématique est produite quand les horizons sur les deux côtés de la faille glissent sur celle-ci, comme l'illustre la figure 16 : des éléments sont incorrectement construits en dehors de la couche formée entre les horizons H0 et H1 en reliant les mêmes i et j.

La malformation des éléments correspondants aux deux configurations ci-dessus, est due à un choix incorrect de la direction de lien entre deux horizons. La solution réside ainsi dans la détection et la correction des mauvaises directions. Pour détecter la présence d'une mauvaise direction pendant la création d'un élément 3D, on vérifie d'abord s'il existe un segment reliant les même I, J qui traverse une faille. Si oui, l'élément 3D comprend effectivement des directions à corriger et il doit être remplacé par deux éléments 3D qui suivent les directions corrigées. Sinon, on vérifie de plus s'il existe une faille qui passe par deux arêtes de l'élément 3D, une sur l'horizon en haut et une autre sur celui en bas. Si oui et si les indices locaux de ces deux arêtes sont différents, l'élément est aussi à corriger. Soit E l'élément 3D en question, F la faille traversante, E1 E2 les deux éléments 3D à créer pour remplacer E. Les bonnes directions sont calculées de la façon suivante :

- on parcourt d'abord tous les noeuds de E en H0 pour trouver les noeuds sur une faille F. Soit P0 un tel noeud. Il existe donc un autre noeud ayant le même IJ qui se trouve sur l'autre côté de cette faille en H0, soit P0'. Soit P1 le noeud en H1 lié à P0 dans E. Au lieu de lier P0 à P1, on lie P0' à P1, P0 à lui même et on associe P0'P1 à E1, P0 à E2. E2 est réduit à un tétraèdre (si E est un prisme) ou un prisme (si E est un hexaèdre). On enregistre P0'P1 en tant qu'une bonne direction de E1. On répète cette procédure sur H1 pour retrouver de bonnes directions d'E2.

- s'il n'y a aucun noeud sur la faille F en H0, on cherche un élément 3D voisin de E par un noeud de E en H0. soit E' l'élément 3D voisin choisi, P2 le noeud en commun, et P2' le noeud en H1 relié à P2 dans E'. On relie P2 à P2' dans E2 et on enregistre P2P2' en tant qu'une bonne direction de E2. De même on calcule la bonne direction de E1 quand aucun noeud en faille F ne se trouve en H1.

En suivant les directions corrigées en E2, tous les noeuds en H0 non encore traités sont projetés sur la surface de faille et liés à ses images correspondantes. Et tous les noeuds en H1 non encore traités sont projetés sur la surface de faille en suivant les directions corrigées en E1, comme l'illustre les figures 17 et 18.

La figure 12 illustre le résultat final d'une mise en correspondance à partir du quadrillage de la figure 11.

La figure 20 comporte deux histogrammes représentant la distribution du nombre N de mailles en fonction de la valeur de la qualité Q de celles-ci pour un exemple de maillage d'un même milieu souterrain. La figure du dessus correspond à la répartition selon l'invention, celle du dessous correspond à la répartition obtenue par le procédé de l'art antérieur. On remarque que grâce à l'invention un nombre plus importants de maille ont une qualité élevée (proche de 1) et un nombre plus faible de mailles ont une qualité faible (proche de 0,5).

Un maillage construit selon l'invention est particulièrement adapté pour simuler les écoulements au sein d'un milieu souterrain en zone à géométrie complexe. L'invention fournit ainsi un outil précis pour réaliser une représentation numérique du milieu souterrain (par exemple une modélisation de bassin). Cette représentation du milieu permet notamment une simulation de réservoir, ou des simulations d'injection de $CO_2$ dans une formation souterraine. Une méthode pour simuler les écoulements au sein d'un milieu souterrain en zone à géométrie complexe, comprend la génération d'un maillage hexa-dominant à partir de la méthode selon l'invention, puis la réalisation de simulations au moyen d'un logiciel adapté (simulateur d'écoulement, simulateur de bassin ou simulateur de réservoir) s'appuyant sur le maillage ainsi généré.

Ces simulations permettent aux spécialistes de tester plusieurs schémas de production puis d'optimiser l'exploration de champ pétrolier, l'exploration ou l'exploitation de réservoir géologique, ou l'injection de gaz dans des milieux souterrains en réalisant le schéma de production optimal (par exemple selon un critère de rentabilité, de volume d'huile récupéré...). Un schéma de production simulé peut correspondre au choix de l'emplacement d'un nouveau puits (producteur ou injecteur), au choix des outils (de forage, d'exploration...), au choix des fluides utilisés ou récupérés, au choix des conditions d'exploitation (débit d'injection ...). L'exploitation du milieu souterrain consiste alors en la réalisation du choix réalisé : par exemple le forage d'un nouveau puits, l'injection de fluide, la modification des conditions d'exploitation et/ou de forage...

**Annexe** : calcul et minimisation du gradient du champ de déplacement

Afin de mieux expliciter la méthode de calcul et de minimisation du gradient du champ de déplacement des noeuds du quadrillage, nous introduisons les notations et les définitions suivantes :

- Soit un ouvert $\Omega_0$ de $\mathbb{R}^2$ représentant la surface $S_o$ à optimiser.

- On dit que la surface $\Omega_0$ est connexe si aucune trace de faille ne la coupe entièrement.

- Si la surface est coupée entièrement par plusieurs traces de failles, on peut considérer cette surface comme une réunion de plusieurs composantes connexes.

$$\Omega_0 = \bigcup_{n=1}^{N} C_n$$

Dans ce cas, on peut écrire : où $C_n$ est une composante connexe.

- Soit un ouvert $\Omega_R$ de $\mathbb{R}^2$ représentant la surface $S_R$ référence dont le maillage est de bonne qualité (quadrillage de référence).

- Soit la déformation $D: \Omega_R \rightarrow \Omega_0$ telle que chaque noeud $N_R$ du bord $\partial\Omega_R$ trouve son image sur un noeud $N_0$ du bord $\partial\Omega_0$ de la surface à optimiser.

- $H^1(\Omega_R)$ est l'ensemble des fonctions u de $L^2(\Omega_R)$ telles que $\nabla(u)$ est de $L^2(\Omega_R)$ avec $L^2(\Omega_R)$ = {$f$ mesurable sur $\Omega$ / $\int |f|^2 < \infty$}.

On peut supposer que la surface $\Omega_0$ est connexe. Si cette surface n'est pas connexe, il suffit de faire une optimisation sur chacune de ses composantes connexes $C_n$.

Optimiser le maillage de la surface $\Omega_0$ revient à minimiser la déformation du champ de déplacement de la surface $\Omega_R$ vers la surface $\Omega_0$. Nous devons donc résoudre le problème d'optimisation suivant :

- Chercher le champ de déplacement $\vec{u} = (u_1,u_2) \in H^1(\Omega_R) \times H^1(\Omega_R)$ imposé sur le bord de $\Omega_R$ et/ou sur les noeuds de $\Omega_R$ dont l'image par D appartient aux noeuds rigides (par exemple les traces de failles) tel que :

$$J(u_m) = \min_{v_m \in H^1(\Omega_R)} J(v_m) \quad m = 1,2 \quad (1)$$

$$\text{où} : J(v_m) = \left( \int_{\Omega_R} |\nabla v_m|^2 \, dM \right) \quad m = 1,2.$$

On note par T" la triangulation de la surface de référence $\Omega_R$. On peut donc écrire :

$$\Omega_R = \bigcup_{T \in T^n} T \quad (2)$$

Où T est un triangle de $\Omega_R$ d'aire égale à $S_T$.

Notons par $N_i, N_j, N_k$ les trois noeuds du triangle T et soit M un point quelconque à l'intérieur du Triangle T. On peut écrire donc :

$$\vec{OM} = \alpha \vec{ON_i} + \beta \vec{ON_j} + \gamma \vec{ON_k} \quad (3)$$

Avec :

$$\alpha = \frac{\left\| \overrightarrow{MN_j} \wedge \overrightarrow{MN_k} \right\|}{2S_T}, \quad \beta = \frac{\left\| \overrightarrow{MN_k} \wedge \overrightarrow{MN_i} \right\|}{2S_T}, \quad \gamma = \frac{\left\| \overrightarrow{MN_i} \wedge \overrightarrow{MN_j} \right\|}{2S_T} \quad (4)$$

Le champ de déplacement $\vec{v}(M) = (v_1(M), v_2(M))$ au point M est tel que :

$$v_m(M) = \alpha u_m(N_i) + \beta u_m(N_j) + \gamma u_m(N_k) \quad m = 1,2 \quad (5)$$

Où $\vec{u}(N_t) = (u_1(N_t), u_2(N_t))t = i, j, k$ représente le champ de déplacement au noeud $N_t$. Ainsi, nous obtenons le gradient de ce champ de déplacement :

$$\nabla v_m(M) = \nabla(\alpha) u_m(N_i) + \nabla(\beta) u_m(N_j) + \nabla(\gamma) u_m(N_k) \quad (6)$$

Nous en déduisons à partir de l'équation (4) que :

$$\nabla v_m(M) = \frac{1}{2S_T} \begin{pmatrix} (y_j - y_k) u_m(N_i) + (y_k - y_i) u_m(N_j) + (y_i - y_j) u_m(N_k) \\ (x_k - x_j) u_m(N_i) + (x_i - x_k) u_m(N_j) + (x_j - x_i) u_m(N_k) \end{pmatrix} \quad (7)$$

D'après (7) $\nabla v_m(M)$ est indépendant de $x$ et $y$, donc ce gradient est contant sut $T$. On déduit alors :

$$\int_T |\nabla v_m|^2 dM = \frac{1}{4S_T} \left( \left( (y_j - y_k) u_m(N_i) + (y_k - y_i) u_m(N_j) + (y_i - y_j) u_m(N_k) \right)^2 \right.$$
$$\left. + \left( (x_k - x_j) u_m(N_i) + (x_i - x_k) u_m(N_j) + (x_j - x_i) u_m(N_k) \right)^2 \right) \quad (8)$$

Nous obtenons ainsi une forme quadratique sur le triangle T que l'on peut écrire :

$$\int_T |\nabla v_m|^2 dM = g_{jk} (u_m^j - u_m^k)^2 + g_{ik} (u_m^i - u_m^k)^2 + g_{ij} (u_m^i - u_m^j)^2 \quad (9)$$

Où pour t = i, j, k $\quad u_m^t = u_m(N_t) \quad$ et

$$\begin{cases} \mathrm{g}_{jk} = \dfrac{1}{2}\cot(\alpha_{jk}) \; avec \; \alpha_{jk} \; est \; l'angle \; du \; triangle \; opposé \; à \; l'arrête \; (N_j, N_k) \\[2mm] \mathrm{g}_{ik} = \dfrac{1}{2}\cot(\alpha_{ik}) \; avec \; \alpha_{ik} \; est \; l'angle \; du \; triangle \; opposé \; à \; l'arrête \; (N_i, N_k) \\[2mm] \mathrm{g}_{ij} = \dfrac{1}{2}\cot(\alpha_{ij}) \; avec \; \alpha_{ij} \; est \; l'angle \; du \; triangle \; opposé \; à \; l'arrête \; (N_i, N_j) \end{cases}$$

Finalement, nous obtenons de l'équation (9) et par définition des mailles adjacentes :

$$\int_{\Omega_R} |\nabla v_m|^2 dM = \sum_{T \in T^n} \int_T |\nabla v_m|^2 ds = \sum_i \sum_{j \leftrightarrow i} \omega_{ij} (u_m^j - u_m^i)^2 \quad (10)$$

Où on somme sur chaque noeud i de la triangulation puis sur chaque noeud j connecté au noeud i par l'arrête

⌊$N_i$,$N_j$⌋. Cette connexion est notée par $j \leftrightarrow i$ comme c'est illustrée sur la figure 22. Les fonctions poids sont telles que :

$$\begin{cases} \omega_{ij} = \dfrac{1}{2}\left(\cot(\alpha_{ij}) + \cot(\alpha_{ji})\right) & \left[N_i, N_j\right] \text{ est arrête interne} \\[4mm] \omega_{ij} = \dfrac{1}{2}\cot(\alpha_{ij}) & \left[N_i, N_j\right] \text{ est une arrête frontière} \end{cases} \quad (11)$$

Ainsi, la fonction à minimiser est une forme quadratique dont les variables sont les champs de déplacements $u_m^i$ de chaque noeud $N_i$ de la surface de référence. Nous la notons par :

$$F(u_m^1, u_m^2, \ldots\ldots\ldots, u_m^{Nb}) = \sum_i \sum_{j \leftrightarrow i} \omega_{ij}(u_m^j - u_m^i)^2 \quad (12)$$

Où $Nb$ est le nombre de noeuds de la surface de référence. Cette fonction est minimale si son gradient est nul. Soit :

$$\frac{\partial F}{\partial u_m^i} = 0 \quad \forall i = 1, \ldots, N_b \quad (13)$$

La minimisation revient dont à résoudre le système suivant :

$$\sum_{j \leftrightarrow i} \omega_{ij}(u_m^j - u_m^i) = 0 \quad \forall i = 1, \ldots, N_b \quad (14)$$

que l'on peut écrire encore sous la forme :

$$u_m^i = \sum_{j \leftrightarrow i} \omega_{ij}^* u_m^j \quad \forall i \quad (15)$$

avec :

$$\omega_{ij}^* = \frac{\omega_{ij}}{\displaystyle\sum_{j \leftrightarrow i} \omega_{ij}} \quad et \quad \sum_{j \leftrightarrow i} \omega_{ij}^* = 1$$

Selon l'invention, l'approche passe par trois étapes :

1. La première consiste à résoudre le système suivant en imposant le champ de déplacement uniquement sur le bord de $\Omega_R$ :

$$u_m^i - \sum_{\substack{j \leftrightarrow i \\ N_j \notin \text{bord}}} \omega_{ij}^* u_m^j = \sum_{\substack{j \leftrightarrow i \\ N_j \in \text{bord}}} \omega_{ij}^* u_m^j \quad \forall i \quad (16)$$

que l'on peut écrire sous la forme :

$$L^{(1)} U = B \quad (17)$$

où $L^{(1)}$ est une matrice carrée d'ordre N égale au nombre de noeuds n'appartenant pas au bord de $\Omega_R$ telle que :

$$L^{(1)}{}_{ij} = \begin{cases} 1 & i = j \\ -\omega^*{}_{ij} & j \leftrightarrow i \ \text{où } N_j \ \text{n'est pas un noeud du bord} \\ 0 & \overline{(j \leftrightarrow i)} \ ou \ (N_j \ \text{est un noeud du bord}) \end{cases} \quad (18)$$

avec le second membre B de taille N tel que :

$$B_i = \sum_{\substack{j \leftrightarrow i \\ N_j \in bord}} \omega^*_{ij} u^j_m \quad pour \quad i = 1,...,N \quad (19)$$

2. La seconde étape consiste à faire le calage des noeuds rigides autres que ceux des bords (par exemple les traces de failles) sur le maillage optimisé résultant de l'étape 1.

3. Après calage des traces de failles sur le maillage, il vient la troisième étape pour résoudre le système suivant en imposant le champ de déplacement non seulement sur le bord mais aussi sur les autres noeuds rigides (par exemple les traces de failles) :

$$u^i_m - \sum_{\substack{j \leftrightarrow i \\ N_j \notin bord \cup traces}} \omega^*_{ij} u^j_m = \sum_{\substack{j \leftrightarrow i \\ N_j \in bord \cup traces}} \omega^*_{ij} u^j_m \quad (20)$$

que l'on peut écrire sous la forme :

$$L^{(2)} U = T \quad (21)$$

où $L^{(2)}$ est une matrice carrée d'ordre M égale au nombre de noeuds n'appartenant pas au bord et aux noeuds rigides (par exemple les traces de failles) telle que :

$$L^{(1)}{}_{ij} = \begin{cases} 1 & i = j \\ -\omega^*{}_{ij} & j \leftrightarrow i \ \text{où } N_j \ \text{n'est pas un noeud du bord ni de traces de failles} \\ 0 & \overline{(j \leftrightarrow i)} \ ou \ (N_j \ \text{est un noeud du bord}) ou \ (N_j \ \text{est un noeud de traces de failles}) \end{cases}$$

avec le second membre T de taille M tel que :

$$T_i = \sum_{\substack{j \leftrightarrow i \\ j \in bord \cup traces}} \omega^*_{ij} u^j_m \quad pour \quad i = 1,...,M \quad (22)$$

Les seconds membres B et T impliquent que le champ de déplacement est imposé sur le bord dans l'étape 1 et sur le bord et les traces de failles dans l'étape 3. Les matrices $L^{(1)}$ et $L^{(2)}$ intervenants dans les systèmes (17) et (21) sont deux matrices symétriques creuses car sur la i ème ligne, tous les coefficients sont nuls sauf pour les j tels que j est connecté à i par une arrête. Ainsi, pour le stockage des ces deux matrices, on peut utiliser un stockage bande. Pour la résolution des deux systèmes, on peut utiliser la méthode de Gauss Seidel adaptatif.

On peut trouver généralement la formule (11) pour des déformations en 2D ou 3D et aussi pour des dépliages conformes. Les articles cités ci-dessous les utilisent pour cet intérêt. On retrouve aussi d'autres manières d'approcher

$$w_{ij} = \frac{1}{N_i} \, ,$$

le Laplacien comme prendre par exemple où $N_i$ est le nombre de voisins du noeud $i$.

Oscar Kin-Chung Au, Chiew-Lan Tai, Ligang Liu, and Hongbo Fu, "Dual Laplacian Editing for Meshes", IEEE TRANSACTIONS ON VISUALIZATION AND COMPUTER GRAPHICS, VOL. 12, NO. 3, pages 386-395, Hangzhou-China, MAY/JUNE 2006.

H. Masuda*, Y. Yoshioka, Y. Furukawa," Interactive Mesh Deformation Using Equality-Constrained Least Squares", Tokyo, Japan, May 2006.

Mathieu Desbrun, Mark Meyer, Pierre Alliez, "Intrinsic Parameterizations of Surface Meshes", EUROGRAPHICS 2002, Volume 21, Number 2, Oxford UK, 2002.

Yanzhen Wang*, Kai Xu, Yueshan Xiong and Zhi-Quan Cheng, "2D shape deformation based on rigid square matching", COMPUTER ANIMATION AND VIRTUAL WORLDS, pages 411-420, Changsha-China, August 2008.

On peut tester l'algorithme sur des surfaces triangulées. On constate pour une optimisation effectué avec le logiciel de calcul Matlab ® (Mathworks, USA), une bonne répartition des mailles après le calage. La surface horizon de référence utilisé est un maillage de Coons généré à partir du bord. L'amélioration de la qualité se fait ressentir, surtout lorsqu'on se trouve loin du bord. À posteriori, les deux parties séparées par les traces de failles considérées au début comme des composantes connexes n'ont effectivement pas la même uniformité du maillage. Aucun pliement n'est détecté pour ce cas parce que les déformations ne sont pas assez imposantes.

## Revendications

**1.** Procédé d'exploitation d'un milieu souterrain, dans lequel on exploite ledit milieu souterrain selon un schéma d'exploitation défini à partir d'une représentation dudit milieu, ladite représentation dudit milieu étant établi à partir d'un quadrillage bidimensionnel représentant ledit milieu souterrain, **caractérisé en ce qu'**on optimise la qualité des mailles dudit quadrillage en déplaçant des noeuds dudit quadrillage par une méthode de minimisation de la déformation dudit quadrillage, ladite qualité d'une maille étant l'aptitude d'une maille à donner des résultats cohérents lors de simulations, ladite qualité d'une maille étant déterminée en calculant le rapport de la valeur de l'angle le plus faible de la maille sur la valeur d'un angle droit, ladite méthode de minimisation dudit quadrillage comporte les étapes suivantes :

(1) on génère un quadrillage de référence comportant uniquement des mailles régulières et recouvrant en totalité ledit quadrillage à optimiser ;

(2) on impose un déplacement d'au moins un noeud, dit noeud rigide, du quadrillage de référence sur un noeud correspondant dans le quadrillage à optimiser, ledit noeud rigide est un noeud appartenant au bord dudit quadrillage à optimiser ou un noeud correspondant à une trace d'une faille dudit milieu souterrain dans ledit quadrillage à optimiser ;

(3) on construit un quadrillage bidimensionnel optimisé par déplacement de tous les autres noeuds dudit quadrillage de référence, en minimisant le champ de déplacement desdits noeuds, par un lissage de toutes les mailles internes, ledit lissage respectant une certaine graduation de la quantité déformée initialement qui s'atténue au fur et à mesure qu'on s'éloigne du voisinage des noeuds rigides desdites failles et dudit bord.

**2.** Procédé d'exploitation d'un milieu souterrain selon un schéma d'exploitation défini à partir d'une représentation dudit milieu, ladite représentation dudit milieu comportant un maillage tridimensionnel, ledit milieu souterrain comprenant au moins une couche sédimentaire traversée par au moins une faille, ladite couche étant délimitée verticalement par deux horizons géologiques, **caractérisée en ce qu'**on réalise les étapes suivantes :

a) on construit une représentation dudit milieu en réalisant les étapes suivantes :

i) on discrétise lesdits horizons géologiques par deux surfaces tridimensionnelles triangulées ;

ii) on transforme chaque surface tridimensionnelle triangulée en une surface bidimensionnelle triangulée sur laquelle on projette ladite faille, au moyen d'une technique de dépliage isométrique, la faille ainsi projetée formant des segments décrivant une courbe ouverte ;

iii) on génère un quadrillage bidimensionnel régulier pour chaque surface bidimensionnelle triangulée ;

iv) on optimise la qualité des mailles de chaque quadrillage bidimensionnel régulier en déplaçant les noeuds dudit quadrillage par une méthode de minimisation de la déformation dudit quadrillage, ladite qualité d'une maille étant l'aptitude d'une maille à donner des résultats cohérents lors de simulations, ladite qualité d'une maille étant déterminée en calculant le rapport de la valeur de l'angle le plus faible de la maille sur la valeur d'un angle droit, ladite méthode de minimisation dudit quadrillage comporte les étapes suivantes :

(1) on génère un quadrillage de référence comportant uniquement des mailles régulières et recouvrant en totalité ledit quadrillage bidimensionnel ;
(2) on déplace des noeuds dudit quadrillage de référence correspondant à des noeuds rigides du quadrillage à optimiser vers lesdits noeuds rigides, lesdits noeuds rigides étant les noeuds des bords du quadrillage bidimensionnel régulier ;
(3) on construit un quadrillage bidimensionnel optimisé par déplacement de tous les autres noeuds dudit quadrillage de référence, en minimisant le champ de déplacement desdits noeuds, par un lissage de toutes les mailles internes qui respecte une certaine graduation de la quantité déformée initialement qui s'atténue au fur et à mesure qu'on s'éloigne du voisinage des noeuds rigides desdites failles et dudit bord ;

v) on déforme chaque quadrillage bidimensionnel régulier optimisé pour caler les noeuds dudit quadrillage sur ladite courbe ;
vi) on optimise la qualité des mailles de chaque quadrillage bidimensionnel déformé en déplaçant les noeuds dudit quadrillage par une méthode de minimisation de la déformation dudit quadrillage, ladite qualité d'une maille étant l'aptitude d'une maille à donner des résultats cohérents lors de simulations, ladite qualité d'une maille étant déterminée en calculant le rapport de la valeur de l'angle le plus faible de la maille sur la valeur d'un angle droit, ladite méthode de minimisation dudit quadrillage comporte les étapes suivantes :

(1) on génère un quadrillage de référence comportant uniquement des mailles régulières et recouvrant en totalité ledit quadrillage bidimensionnel ;
(2) on déplace des noeuds dudit quadrillage de référence correspondant à des noeuds rigides du quadrillage à optimiser vers lesdits noeuds rigides, lesdits noeuds rigides étant les noeuds des bords du quadrillage bidimensionnel régulier et les noeuds de ladite courbe ;
(3) on construit un quadrillage bidimensionnel optimisé par déplacement de tous les autres noeuds dudit quadrillage de référence, en minimisant le champ de déplacement desdits noeuds, par un lissage de toutes les mailles internes qui respecte une certaine graduation de la quantité déformée initialement qui s'atténue au fur et à mesure qu'on s'éloigne du voisinage des noeuds rigides desdites failles et dudit bord. ;

vii) on effectue un changement de repère pour transformer chaque quadrillage optimisé ainsi déformé en une surface quadrillée tridimensionnelle, et on transforme en deux triangles chaque quadrilatère traversé par ladite faille au niveau d'une diagonale ;
viii) on génère le maillage de la représentation du milieu souterrain en créant des liaisons entre chaque noeud de chaque quadrilatère et de chaque triangle des deux surfaces quadrillées tridimensionnelles, et en découpant chaque maille dudit maillage du milieu souterrain traversée par ladite faille ;

b) on simule au moins un schéma d'exploitation au moyen de ladite représentation du milieu et d'un simulateur d'écoulement ; et
c) on exploite ledit milieu en mettant en oeuvre un schéma d'exploitation optimal.

3. Procédé selon l'une des revendications précédentes, dans lequel ladite optimisation de la qualité desdites mailles par ladite méthode de minimisation de déformation du quadrillage comprend en outre une étape finale de test de validité du maillage, si le maillage n'est pas valide les étapes (1) à (3) sont réitérées.

4. Procédé selon la revendication 3, dans lequel le test de validité consiste à détecter les surfaces bidimensionnelles pliées dudit quadrillage bidimensionnel optimisé, si des surfaces pliées sont détectées, alors le champ de déplacement est divisé par deux lors de la réitération des étapes (1) à (3).

5. Procédé selon l'une des revendications précédentes, dans lequel ladite méthode de minimisation de déformation du quadrillage comprend en outre une étape de conversion du quadrillage en un maillage triangulaire pour les étapes de déplacement des noeuds.

6. Procédé selon l'une des revendications précédentes, dans lequel ledit quadrillage de référence est généré en réalisant les étapes suivantes :

i) on génère un quadrillage bidimensionnel composé de rectangles sur ledit quadrillage à optimiser ;

ii) on oriente ledit quadrillage dans la direction dudit quadrillage à optimiser;

iii) on transforme ledit quadrillage par rotation, par dilatation et par translation de manière à ce que ledit quadrillage ait les mêmes propriétés géométriques que ledit quadrillage bidimensionnel à optimiser.

**7.** Procédé selon la revendication 2, dans lequel on génère ledit quadrillage régulier au moyen des étapes suivantes :

i) on choisit quatre points sur la bordure de la surface bidimensionnelle, définissant quatre courbes sur la bordure ;

ii) on choisit les dimensions du quadrillage (N, M), et l'on discrétise alternativement chacune des quatre courbes en fonction desdites dimensions ; et

iii) on applique la formule de Coons pour construire le quadrillage.

**8.** Procédé selon l'une des revendications 2 ou 7, dans lequel pour l'étape v) avant de déplacer ladite extrémité la plus proche, on vérifie que ce déplacement n'engendre pas un quadrilatère dont au moins un angle est supérieur à un seuil d'angle fixé, si c'est le cas, on déplace l'autre extrémité de l'arrête intersectée.

**9.** Procédé selon l'une des revendications 2, 7 ou 8, dans lequel on transforme ledit quadrillage régulier en une surface quadrillée à trois dimensions en réalisant les étapes suivantes :

i) pour chaque noeud non situé sur une faille, on détermine ses coordonnées à partir de coordonnées barycentriques du noeud dans un repère défini par un triangle de la surface triangulée 2D auquel il appartient ;

ii) pour chaque noeud situé sur une faille, on détermine ses coordonnées à partir d'abscisses curvilignes mesurées sur ladite faille ; et

iii) on établit des connectivités entre les noeuds de façon à maximiser un nombre de quadrilatères, seuls des quadrilatères pour lesquels une faille passe par l'une de ses diagonales sont divisés en deux triangles.

**10.** Procédé selon la revendication 9, dans lequel on crée des liaisons entre les noeuds en reliant chaque noeud de chaque surface quadrillée tridimensionnelle ayant des mêmes coordonnées i, j, et si une faille intersecte cette liaison, on relie un noeud avec ladite faille en considérant une direction d'un noeud voisin.

**11.** Produit programme d'ordinateur téléchargeable depuis un réseau de communication et/ou enregistré sur un support lisible par ordinateur et/ou exécutable par un processeur, dans lequel il comprend des instructions de code de programme pour la mise en oeuvre du procédé selon l'une quelconque des revendications précédentes, lorsque ledit programme est exécuté sur un ordinateur.

## Patentansprüche

**1.** Verfahren zur Ausbeutung eines unterirdischen Milieus nach einem Ausbeutungsschema, das auf Basis einer Darstellung des Milieus definiert wird, wobei die Darstellung des Milieus auf Basis eines zweidimensionalen Rasternetzes erstellt wird, das das unterirdische Milieu darstellt, **dadurch gekennzeichnet, dass** die Qualität der Maschen des Rasternetzes optimiert wird, wobei Knoten des Rasternetzes durch eine Methode der Minimierung der Verformung des Rasternetzes verlagert werden, wobei die Qualität einer Masche die Fähigkeit einer Masche ist, kohärente Resultate bei einer Simulation zu ergeben, wobei die Qualität einer Masche bestimmt wird, wobei das Verhältnis des Werts des kleinsten Winkels der Masche zum Wert eines rechten Winkels bestimmt wird, wobei die Methode der Minimierung des Rasternetzes die folgenden Schritte umfasst:

(1) Erzeugung eines Referenzrasternetzes, das nur regelmäßige Maschen umfasst und die Gesamtheit des zu optimierenden Rasternetzes abdeckt;

(2) Vorgabe einer Verlagerung mindestens eines Knotens, starrer Knoten genannt, des Referenzrasternetzes auf einen entsprechenden Knoten in dem zu optimierenden Rasternetz, wobei der starre Knoten ein Knoten ist, der dem Rand des zu optimierenden Rasternetzes angehört, oder ein Knoten, der einer Spur einer Verwerfung des unterirdischen Milieus in dem zu optimierenden Rasternetz entspricht;

(3) Konstruktion eines optimierten zweidimensionalen Rasternetzes durch Verlagerung aller anderen Knoten des Referenzrasternetzes, wobei das Verlagerungsfeld der Knoten minimiert wird, durch ein Glätten aller internen Maschen, wobei das Glätten eine gewisse Abstufung der ursprünglich verformten Menge berücksichtigt, die sich im Zuge der Entfernung von der Nähe der starren Knoten der Verwerfungen und des Randes abschwächt.

2. Verfahren zur Ausbeutung eines unterirdischen Milieus nach einem Ausbeutungsschema, das auf Basis einer Darstellung des Milieus definiert wird, wobei die Darstellung des Milieus ein dreidimensionales Maschennetz umfasst, wobei das unterirdische Milieu mindestens eine Sedimentschicht, die von mindestens einer Verwerfung durchquert wird, umfasst, wobei die Schicht vertikal durch zwei geologische Horizonte begrenzt ist, **dadurch gekennzeichnet, dass** die folgenden Schritte durchgeführt werden:

   a) Konstruktion einer Darstellung des Milieus, wobei die folgenden Schritte durchgeführt werden:

   i) Unstetigmachen der geologischen Horizonte durch zwei dreieckige dreidimensionale Flächen;
   ii) Umformen jeder dreieckigen dreidimensionalen Fläche in eine dreieckige zweidimensionale Fläche, auf die die Verwerfung mit Hilfe einer isometrischen Entfaltungstechnik projiziert wird, wobei die so projizierte Verwerfung Segmente bildet, die eine offene Kurve beschreiben;
   iii) Erzeugen eines regelmäßigen zweidimensionalen Rasternetzes für jede dreieckige zweidimensionale Fläche;
   iv) Optimieren der Qualität der Maschen jedes regelmäßigen zweidimensionalen Rasternetzes, wobei die Knoten des Rasternetzes durch eine Methode der Minimierung der Verformung des Rasternetzes verlagert werden, wobei die Qualität einer Masche die Fähigkeit einer Masche ist, kohärente Resultate bei einer Simulation zu ergeben, wobei die Qualität einer Masche bestimmt wird, wobei das Verhältnis des Werts des kleinsten Winkels der Masche zum Wert eines rechten Winkels bestimmt wird, wobei die Methode der Minimierung des Rasternetzes die folgenden Schritte umfasst:

   (1) Erzeugung eines Referenzrasternetzes, das nur regelmäßige Maschen umfasst und die Gesamtheit des zu optimierenden Rasternetzes abdeckt;
   (2) Verlagerung der Knoten des Referenzrasternetzes entsprechend starren Knoten des zu optimierenden Rasternetzes zu den starren Knoten, wobei die starren Knoten die Knoten der Ränder des regelmäßigen zweidimensionalen Rasternetzes sind;
   (3) Konstruktion eines optimierten zweidimensionalen Rasternetzes durch Verlagerung aller anderen Knoten des Referenzrasternetzes, wobei das Verlagerungsfeld der Knoten minimiert wird, durch ein Glätten aller internen Maschen, das eine gewisse Abstufung der ursprünglich verformten Menge berücksichtigt, die sich im Zuge der Entfernung von der Nähe der starren Knoten der Verwerfungen und des Randes abschwächt;

   v) Verformen jedes optimierten regelmäßigen zweidimensionalen Rasternetzes, um die Knoten des Rasternetzes auf der Kurve zu befestigen;
   vi) Optimieren der Qualität der Maschen jedes verformten zweidimensionalen Rasternetzes, wobei die Knoten des Rasternetzes durch eine Methode der Minimierung der Verformung des Rasternetzes verlagert werden, wobei die Qualität einer Masche die Fähigkeit einer Masche ist, kohärente Resultate bei einer Simulation zu ergeben, wobei die Qualität einer Masche bestimmt wird, wobei das Verhältnis des Werts des kleinsten Winkels der Masche zum Wert eines rechten Winkels bestimmt wird, wobei die Methode der Minimierung des Rasternetzes die folgenden Schritte umfasst:

   (1) Erzeugung eines Referenzrasternetzes, das nur regelmäßige Maschen umfasst und die Gesamtheit des zweidimensionalen Rasternetzes abdeckt;
   (2) Verlagerung der Knoten des Referenzrasternetzes entsprechend starren Knoten des zu optimierenden Rasternetzes zu den starren Knoten, wobei die starren Knoten die Knoten der Ränder des regelmäßigen zweidimensionalen Rasternetzes und die Knoten der Kurve sind;
   (3) Konstruktion eines optimierten zweidimensionalen Rasternetzes durch Verlagerung aller anderen Knoten des Referenzrasternetzes, wobei das Verlagerungsfeld der Knoten minimiert wird, durch ein Glätten aller internen Maschen, das eine gewisse Abstufung der ursprünglich verformten Menge berücksichtigt, die sich im Zuge der Entfernung von der Nähe der starren Knoten der Verwerfungen und des Randes abschwächt;

   vii) Durchführen einer Bezugszeichenänderung, um jedes so verformte optimierte Rasternetz in eine dreidimensionale Rasterfläche umzuformen, und Umformen jedes von der Verwerfung im Bereich einer Diagonale durchquerte Viereck zu zwei Dreiecken;
   viii) Erzeugen des Maschennetzes der Darstellung des unterirdischen Milieus durch Erzeugen von Verbindungen zwischen jedem Knoten jedes Vierecks und jedes Dreiecks der zwei dreidimensionalen Rasterflächen und durch Ausschneiden jeder Masche aus dem Maschennetz des unterirdischen Milieus, die von der Verwerfung durchquert wird;

b) Simulieren mindestens eines Ausbeutungsschemas mit Hilfe der Darstellung des Milieus und eines Flusssimulators; und

c) Ausbeuten des Milieus durch Einsatz eines optimalen Ausbeutungsschemas.

3. Verfahren nach einem der vorhergehenden Ansprüche, bei dem die Optimierung der Qualität der Maschen durch die Methode der Minimierung der Verformung des Rasternetzes ferner einen Endschritt eines Validitätstests des Maschennetzes umfasst, wenn das Maschennetz nicht valide ist, die Schritte (1) bis (3) reiteriert werden.

4. Verfahren nach Anspruch 3, bei dem der Validitätstest darin besteht, die gefalteten zweidimensionalen Flächen des optimierten zweidimensionalen Rasternetzes zu erkennen, wenn gefaltete Flächen erkannt werden, das Verlagerungsfeld bei der Reiteration der Schritte (1) bis (3) durch zwei geteilt wird.

5. Verfahren nach einem der vorhergehenden Ansprüche, bei dem die Methode der Minimierung der Verformung des Rasternetzes ferner einen Schritt der Umwandlung des Rasternetzes in ein dreieckiges Maschennetz für die Verlagerungsschritte der Knoten umfasst.

6. Verfahren nach einem der vorhergehenden Ansprüche, bei dem das Referenzrasternetz erzeugt wird, wobei die folgenden Schritte durchgeführt werden:

i) Erzeugen eines aus Rechtecken bestehenden zweidimensionalen Rasternetzes auf dem zu optimierenden Rasternetz;
ii) Ausrichten des Rasternetzes in die Richtung des zu optimierenden Rasternetzes;
iii) Umformen des Rasternetzes durch Rotation, Ausdehnung und Translation, so dass das Rasternetz dieselben geometrischen Eigenschaften wie das zu optimierende zweidimensionale Rasternetz hat.

7. Verfahren nach Anspruch 2, bei dem das regelmäßige Rasternetz mit Hilfe der folgenden Schritte erzeugt wird:

i) Auswählen von vier Punkten am Rand der zweidimensionalen Fläche, die vier Kurven am Rand definieren;
ii) Auswählen der Dimensionen des Rasternetzes (N, M) und abwechselnd Unstetigmachen jeder der vier Kurven in Abhängigkeit von den Dimensionen; und
iii) Anwenden der Coons-Formel, um das Rasternetz zu konstruieren.

8. Verfahren nach einem der Ansprüche 2 oder 7, bei dem für den Schritt v) vor der Verlagerung des nächsten Endes überprüft wird, ob diese Verlagerung nicht ein Rasternetz erzeugt, bei dem mindestens ein Winkel größer als eine festgesetzte Winkelgrenze ist, falls dies nicht der Fall ist, das andere Ende der Schnittkante verlagert wird.

9. Verfahren nach einem d er Ansprüche 2, 7 oder 8, bei dem das regelmäßige Rasternetz in eine Rasterfläche mit drei Dimensionen umgeformt wird, wobei die folgenden Schritte durchgeführt werden:

i) für jeden nicht auf einer Verwerfung befindlichen Knoten Bestimmung seiner Koordinaten aus baryzentrischen Koordinaten des Knotens in einem Bezugspunkt, der durch ein Dreieck der dreieckigen Fläche 2D, der er angehört, definiert ist;
ii) für jeden auf einer Verwerfung befindlichen Knoten Bestimmung seiner Koordinaten aus kurvigen Abszissen, die auf der Verwerfung gemessen werden; und
iii) Erstellung der Verbindungsfähigkeiten zwischen den Knoten, um eine Anzahl von Vierecken zu maximieren, wobei nur Vierecke, bei denen eine Verwerfung durch eine ihrer Diagonalen verläuft, in zwei Dreiecke geteilt werden.

10. Verfahren nach Anspruch 9, bei dem Verbindungen zwischen den Knoten erzeugt werden, wobei jeder Knoten jeder dreidimensionalen Rasterfläche mit denselben Koordinaten i, j verbunden wird, und wenn eine Verwerfung diese Verbindung kreuzt, ein Knoten mit der Verwerfung verbunden wird, wobei eine Richtung eines benachbarten Knotens betrachtet wird.

11. Computerprogrammprodukt, das von einem Kommunikationsnetz herunterladbar und/oder auf einem von einem Computer lesbaren Träger aufgezeichnet und/oder von einem Prozessor ausführbar ist, das Programmcodeanweisungen für den Einsatz des Verfahrens nach einem der vorhergehenden Ansprüche umfasst, wenn das Programm auf einem Computer ausgeführt wird.

**Claims**

1. A method of developing an underground medium, wherein said underground medium is developed according to a development scheme defined from a representation of said medium, said representation of said medium being established from a two-dimensional grid representing said underground medium, **characterized in that** the quality of the cells of said grid is optimized by moving nodes of said grid using a method of minimizing the deformation of said grid, said quality of a cell being the capacity of a cell to deliver coherent results during simulations, said quality of a cell being determined by calculating the ratio of the value of the smallest angle of the cell to the value of a right angle, said method of minimizing said grid comprising the following steps:

   (1) generating a reference grid having only regular cells and covering entirely said grid to be optimized,
   (2) imposing a displacement of at least one node, known as rigid node, of the reference grid onto a corresponding node in the grid to be optimized, said rigid node is a node belonging to the edge of said grid to be optimized or a node corresponding to a trace of a fault of said underground medium in said grid to be optimized,
   (3) constructing an optimized two-dimensional grid by moving all the other nodes of said reference grid, by minimizing the displacement field of said nodes, by smoothing all the internal nodes, said smoothing keeping to a certain graduation of the initially deformed quantity that subsides the further one moves away from the vicinity of the rigid nodes of said faults and of said edge.

2. A method of developing an underground medium according to a development scheme defined from a representation of said medium, said representation of said medium comprising a three-dimensional grid, said underground medium comprising at least one sedimentary layer traversed by at least one fault, said layer being vertically delimited by two geological horizons, **characterized in that** the following steps are carried out:

   a) constructing a representation of said medium by carrying out the following steps:

      i) discretizing said geological horizons by two triangulated three-dimensional surfaces,
      ii) transforming each triangulated three-dimensional surface into a triangulated two-dimensional surface onto which said fault is projected, by means of an isometric unfolding technique, the fault thus projected forming segments describing an open curve,
      iii) generating a regular two-dimensional grid for each triangulated two-dimensional surface,
      iv) optimizing the quality of the cells of each regular two-dimensional grid by moving the nodes of said grid using a method of minimizing the deformation of said grid, said quality of a cell being the capacity of a cell to deliver coherent results during simulations, said quality of a cell being determined by calculating the ratio of the value of the smallest angle of the cell to the value of a right angle, said method of minimizing said grid comprising the following steps:

         (1) generating a reference grid having only regular cells and covering entirely said two-dimensional grid,
         (2) moving nodes of said reference grid corresponding to rigid nodes of the grid to be optimized towards said rigid nodes, said rigid nodes being the nodes of the edges of the regular two-dimensional grid,
         (3) constructing an optimized two-dimensional grid by moving all the other nodes of said reference grid, by minimizing the displacement field of said nodes, by a smoothing of all the internal nodes that keeps to a certain graduation of the initially deformed quantity that subsides the further one moves away from the vicinity of the rigid nodes of said faults and of said edge,

      v) deforming each optimized regular two-dimensional grid so as to adjust the nodes of said grid on said curve,
      vi) optimizing the quality of the cells of each deformed two-dimensional grid by moving the nodes of said grid using a method of minimizing the deformation of said grid, said quality of a cell being the capacity of a cell to deliver coherent results during simulations, said quality of a cell being determined by calculating the ratio of the value of the smallest angle of the cell to the value of a right angle, said method of minimizing said grid comprising the following steps:

         (1) generating a reference grid having only regular cells and covering entirely said two-dimensional grid,
         (2) moving nodes of said reference grid corresponding to rigid nodes of the grid to be optimized towards said rigid nodes, said rigid nodes being the nodes of the edges of the regular two-dimensional grid and the nodes of said curve,,

(3) constructing an optimized two-dimensional grid by moving all the other nodes of said reference grid, by minimizing the displacement field of said nodes, by a smoothing of all the internal nodes that keeps to a certain graduation of the initially deformed quantity that subsides the further one moves away from the vicinity of the rigid nodes of said faults and of said edge,

vii) performing a reference frame change so as to transform each optimized grid thus deformed into a three-dimensional gridded surface, and transforming each quadrilateral traversed by said fault at a diagonal into two triangles,

viii) generating the grid of the underground medium representation by creating links between each node of each quadrilateral and of each triangle of the two three-dimensional gridded surfaces, and by cutting each cell of said underground medium grid traversed by said fault,

b) simulating at least one development scheme by means of said medium representation and of a flow simulator, and

c) developing said medium by implementing an optimal development scheme.

3. A method as claimed in any one of the previous claims, wherein said optimization of the quality of said cells with said grid deformation minimization method further comprises a final step of testing the validity of the grid, and if the grid is not valid, steps (1) to (3) are repeated.

4. A method as claimed in claim 3, wherein the validity test consists in detecting the folded two-dimensional surfaces of said optimized two-dimensional grid, and if folded surfaces are detected, the displacement field is halved when repeating steps (1) to (3).

5. A method as claimed in any one of the previous claims, wherein said grid deformation minimization method further comprises a step of converting the grid to a triangular grid for the node displacement steps.

6. A method as claimed in any one of the previous claims, wherein said reference grid is generated by carrying out the following steps:

i) generating a two-dimensional grid comprised of rectangles on said grid to be optimized,
ii) orienting said grid in the direction of said grid to be optimized,
iii) transforming said grid by rotation, dilation and translation so that said grid has the same geometric properties as said two-dimensional grid to be optimized.

7. A method as claimed in claim 2, wherein said regular grid is generated by carrying out the following steps:

i) selecting four points on the edge of the two-dimensional surface, defining four curves on the edge,
ii) selecting the dimensions of the grid (N, M) and alternately discretizing each of the four curves as a function of said dimensions, and
iii) applying the Coons formula to construct the grid.

8. A method as claimed in any one of claims 2 or 7 wherein, for step v), prior to moving said closest end, it is checked that this displacement does not generate a quadrilateral of which at least one angle is greater than a fixed angle threshold, and if so, the other end of the intersected edge is moved.

9. A method as claimed in any one of claims 2, 7 or 8, wherein said regular grid is transformed into a three-dimensional gridded surface by carrying out the following steps:

i) for each node not located on a fault, determining the coordinates thereof from barycentric coordinates of the node in a reference frame defined by a triangle of the 2D triangulated surface it belongs to,
ii) for each node located on a fault, determining the coordinates thereof from curvilinear abscissas measured on said fault, and
iii) establishing connectivities between the nodes so as to maximize a number of quadrilaterals, only quadrilaterals for which a fault passes through one of the diagonals thereof are divided into two triangles.

10. A method as claimed in claim 9, wherein links are created between the nodes by connecting each node of each three-dimensional gridded surface having the same coordinates i, j, and if a fault intersects this link, a node is connected to said fault by considering a direction of a neighbouring node.

11. A computer program product downloadable from a communication network and/or recorded on a computer readable medium and/or processor executable, comprising program code instructions for implementing the method as claimed in any one of the previous claims, when said program is executed on a computer.

Fig. 1

Fig. 2a)                                Fig. 2b)

Fig. 2

Fig. 3a)                                    Fig. 3b)

Fig. 3

Fig. 4

Fig. 5

Fig. 6

**Fig. 7**

**Fig. 8**

Fig. 9

Fig. 10

Fig. 11

**Fig. 13**

**Fig. 14**

**Fig. 15**

Fig. 16

Fig. 17

Fig. 18

Fig. 19a)

Fig. 19b)

Fig. 19c)

Fig. 19d)

Fig. 19

**Fig. 20**

**Fig. 21**

**Fig. 22**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2948215

**Littérature non-brevet citée dans la description**

- **OSCAR KIN-CHUNG AU ; CHIEW-LAN TAI ; LIGANG LIU ; HONGBO FU.** Dual Laplacian Editing for Meshes. *IEEE TRANSACTIONS ON VISUALIZATION AND COMPUTER GRAPHICS,* 2006, vol. 12 (3), 386-395
- **H. MASUDA ; Y. YOSHIOKA ; Y. FURUKAWA.** *Interactive Mesh Deformation Using Equality-Constrained Least Squares,* Mai 2006

- **MATHIEU DESBRUN ; MARK MEYER ; PIERRE ALLIEZ.** Intrinsic Parameterizations of Surface Meshes. *EUROGRAPHICS,* 2002, vol. 21 (2
- **YANZHEN WANG ; KAI XU ; YUESHAN XIONG ; ZHI-QUAN CHENG.** 2D shape deformation based on rigid square matching. *COMPUTER ANIMATION AND VIRTUAL WORLDS,* Août 2008, 411-420